(19) Europäisches Patentamt
European Patent Office
Office européen des brevets

(11) **EP 3 401 840 A1**

(12) **EUROPEAN PATENT APPLICATION**

(43) Date of publication:
**14.11.2018 Bulletin 2018/46**

(51) Int Cl.:
***G06K 9/00*** (2006.01)

(21) Application number: **18171784.4**

(22) Date of filing: **11.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.05.2017 DE 102017110356**

(71) Applicant: **Frobas GmbH**
**85659 Forstern (DE)**

(72) Inventors:
• **STRUHARIK, Rastislav**
**21000 Novi Sad (RS)**
• **VUKOBRATOVIC, Bogdan**
**21000 Novi Sad (RS)**

(74) Representative: **Neusser, Sebastian**
**Kraus & Weisert**
**Patentanwälte PartGmbB**
**Thomas-Wimmer-Ring 15**
**80539 München (DE)**

(54) **COMPRESSED DATA STREAMS IN OBJECT RECOGNITION**

(57) Coincident non-zero values (880) are detected at corresponding positions (831) in a first data stream (820-1) indicative of data of an input feature map and in a second data stream (820-2) indicative of data of a filter map. The first data stream and the second data stream are routed to a plurality of computational units for performing filter operations for recognition of at least one object depending on said detecting of the coincident non-zero values (880).

**FIG. 21**

**Description**

TECHNICAL FIELD

Various examples of the invention generally relate to controlling operation of a plurality of computational units. Various examples of the invention specifically relate to routing data streams to the plurality of computational units depending on a detection of non-zero values in the data streams and the plurality of computational units performing filter operations for recognition of at least one object.

BACKGROUND

In recent years, automated object recognition and identification of the type of the recognized objects (object classification) is applied in various fields. Examples include assisted driving and autonomous driving, voice recognition, image analysis, etc. In view of the wide variety of applications, the objects to be classified can widely vary. Generally, an object includes a set of features. The features are typically arranged in a certain inter-relationship with respect to each other. For example, typical objects in the field of image analysis for assisted and autonomous driving may include: neighboring vehicles; lane markings; traffic signs; pedestrians; etc.. Features may include: edges; colors; geometrical shapes; etc..

One technique employed for object classification are neural networks. Neural networks are typically hierarchical graph-based algorithms, wherein the structure of the graph correlates with previously trained recognition capabilities. The neural networks break down the problem of classification of an object into sequential recognition of the various features and their inter-relationship. In detail, typically, the neural network is initially trained by inputting information (machine learning or training), e.g., using techniques of backpropagation; here, supervised and semi-supervised training or even fully automatic training helps to configure the neural network to accurately recognize objects. Then, the trained neural network can be applied to a classification task. When processing input data (sometimes also called input instance) - such as image data, audio data, sensor data, video data, etc. -, the data is transformed into an input feature map of a given dimensionality, e.g., 2-D, 3-D, or 4-D. Then, a typical neural network includes a plurality of layers which are arranged sequentially. Each layer receives a corresponding input feature map which has been processed by a preceding layer. Each layer processes the respective input feature map based on a layer-specific filter map including filter coefficients. The filter map defines a strength of connection (weights) between data points of subsequent layers (neurons). Different layers correspond to different features of the object. Each layer outputs a processed input feature map (output feature map) to the next layer. The last layer then provides - as the respective output feature map - output data (sometimes also referred to as classification vector) which is indicative of the recognized objects, e.g., their position, orientation, count, and/or type/class.

Neural network can be implemented in software and/or hardware. For example, according to reference implementations, neural network can be implemented in software executed on a general-purpose central processing unit (CPU). It is also possible to implement neural network algorithms on a graphical processor unit (GPU). In other examples, it is also possible to implement neural network algorithms at least partly in hardware, e.g., using a field-programmable gate array (FPGA) integrated circuit or an application specific integrated circuit (ASIC). See, for example: Dundar, Aysegul, et al. "Embedded Streaming Deep Neural Networks Accelerator With Applications." IEEE transactions on neural networks and learning systems (2016).

Generally, processing of unclassified data by means of a neural network (forward pass) requires significant computational resources, typically both in terms of processing power and memory access requirements. One bottleneck in terms of computational resources is that, typically, on-chip memory is insufficient for storing the various intermediate feature maps and filter maps that occur during processing a particular input data. This typically results in a need for significant memory read/write operations (data movement) with respect to an off-chip/external memory. This data movement can be, both, energy inefficient, as well as time consuming.

To mitigate this issue, techniques are known which provide for a particular hardware architecture with respect to external memory and internal memory. See, for example: Chen, Yu-Hsin, et al. "Eyeriss: An energy-efficient reconfigurable accelerator for deep convolutional neural networks." IEEE Journal of Solid-State Circuits (2016).

However, also such techniques face certain restrictions and drawbacks. For example, it has been observed that data movement can be significant and that allocation of on-chip cache memory can be suboptimal.

SUMMARY

Therefore, a need exists for advanced techniques of recognition of objects. In particular, need exists for techniques which overcome or mitigate at least some of the above-identified drawbacks and limitations.

This need is met by the features of the independent claims. The features of the dependent claims define embodiments.

A circuit includes a plurality of computational units. The plurality of computational units is configured to perform filter operations for recognition of at least one object. The circuit further includes at least one memory. The at least one memory is configured to store an input feature map representing the at least one object and a filter map. The circuit further includes control logic configured to detect coincident non-zero values at corresponding positions in a first data stream and in a second data stream. The first data stream is indicative of data of the input feature map and the second data stream is indicative of data of the filter map. The control logic is further configured to route the first data stream and the second data stream to the plurality of computational units depending on said detecting of the coincident non-zero values.

A method includes detecting coincident non-zero values at corresponding positions in a first data stream and in a second data stream. The first data stream is indicative of data of an input feature map. The input feature map represents at least one object. The second data stream is indicative of data of a filter map. The method further includes, depending on said detecting of the coincident non-zero values: routing the first data stream and the second data stream to a plurality of computational units. The method further includes the plurality of computational units performing filter operations for recognition of the at least one object based on the first data stream and the second data stream.

A computer program product includes program code to be executed by a circuit. Executing the program code causes the circuit to perform a method. The method includes detecting coincident non-zero values at corresponding positions in a first data stream and in a second data stream. The first data stream is indicative of data of an input feature map. The input feature map represents at least one object. The second data stream is indicative of data of a filter map. The method further includes, depending on said detecting of the coincident non-zero values: routing the first data stream and the second data stream to a plurality of computational units. The method further includes the plurality of computational units performing filter operations for recognition of the at least one object based on the first data stream and the second data stream.

A computer program includes program code to be executed by a circuit. Executing the program code causes the circuit to perform a method. The method includes detecting coincident non-zero values at corresponding positions in a first data stream and in a second data stream. The first data stream is indicative of data of an input feature map. The input feature map represents at least one object. The second data stream is indicative of data of a filter map. The method further includes, depending on said detecting of the coincident non-zero values: routing the first data stream and the second data stream to a plurality of computational units. The method further includes the plurality of computational units performing filter operations for recognition of the at least one object based on the first data stream and the second data stream.

It is to be understood that the features mentioned above and those yet to be explained below may be used not only in the respective combinations indicated, but also in other combinations or in isolation without departing from the scope of the invention.

BRIEF DESCRIPTION OF THE DRAWINGS

FIG. 1 schematically illustrates a circuit including an external memory and a computer including an internal memory.

FIG. 2 is a flowchart of a method of processing data using a multi-layer neural network according to various examples.

FIG. 3 schematically illustrates the various layers of the multi-layer neural network, as well as receptive fields of neurons of the neural network arranged with respect to respective feature maps according to various examples.

FIG. 4 schematically illustrates a convolutional layer of the layers of the multi-layer network according to various examples.

FIG. 5 schematically illustrates a stride between of a convolution of an input feature map with a kernel positioned at various positions throughout the feature map according to various examples, wherein the different positions correspond to different receptive fields.

FIG. 6 schematically illustrates arithmetic operations associated with a convolution according to various examples.

FIG. 7 schematically illustrates a cubic kernel having a large kernel size according to various examples.

FIG. 8 schematically illustrates a cubic kernel having a small kernel size according to various examples.

FIG. 9 schematically illustrates a spherical kernel having a large kernel size according to various examples.

FIG. 10 schematically illustrates a pooling layer of the layers of the multi-layer network according to various examples.

FIG. 11 schematically illustrates an adding layer of the layers of the multi-layer network according to various examples.

FIG. 12 schematically illustrates a concatenation layer of the layers of the multi-layer network according to various examples.

FIG. 13 schematically illustrates a fully-connected layer of the layers of the multi-layer network according to various examples, wherein the fully-connected layer is connected to a not-fully-connected layer.

FIG. 14 schematically illustrates a fully-connected layer of the layers of the multi-layer network according to various examples, wherein the fully-connected layer is connected to a fully-connected layer.

FIG. 15 schematically illustrates a circuit including an external memory and a computer according to various examples, wherein the computer includes a plurality of calculation modules.

FIG. 16 schematically illustrates a circuit including an external memory and a computer according to various examples, wherein the computer includes a single calculation module.

FIG. 17 schematically illustrates a circuit including an external memory and a computer according to various examples, wherein the computer includes a plurality of calculation modules.

FIG. 18 schematically illustrates details of a calculation module, the calculation module including a plurality of computational units according to various examples.

FIG. 19 is a flowchart of a method according to various examples.

FIG. 20 schematically illustrates non-compressed and compressed data streams including zero values and non-zero values according to various examples.

FIG. 21 schematically illustrates detecting coincident non-zero values at corresponding positions in multiple data streams and furthermore illustrates routing the data streams based on said detecting according to various examples.

FIG. 22 schematically illustrates buffering and forwarding of output data streams obtained from a plurality of computational units according to various examples.

DETAILED DESCRIPTION OF EMBODIMENTS

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, or components shown in the drawings or described herein may also be implemented by an indirect connection or coupling. A coupling between components may also be established over a wireless connection. Functional blocks may be implemented in hardware, firmware, software, or a combination thereof.

Hereinafter, techniques of recognition and, in particular, classification are described. For example, objects can be classified in input data such as sensor data, audio data, video data, image data, etc.. Classifications of objects can yield output data which is indicative of one or more properties of the objects, e.g., of the position of the objects within the input data, of the orientation of the objects within the input data, a type of the objects, etc.

The techniques described herein can facilitate object recognition based on graph-based algorithms. The techniques described herein can facilitate object recognition based on filter operations between an input feature map - representing one or more objects - and a filter map. The filter map may include one or more filters. Examples of filters include kernels which are convolved across the input feature map. According to some examples, neural networks are employed for the object recognition, e.g., multi-layer neural networks or deep neural networks. A particular form of neural networks that can be employed according to examples are convolutional neural networks (CNN).

CNNs are a type of feed-forward neural networks in which the connectivity between the neurons is inspired by the connectivity found in the animal visual cortex. Individual neurons from the visual cortex respond to stimuli from a restricted region of space, known as receptive field. In other words, the receptive field of a neuron may designate a 3-D region within the respective input feature map to which said neuron is directly connected to. The receptive fields of neighboring neurons may partially overlap. The receptive fields may span the entire visual field, i.e., the entire input feature map. It was shown that the response of an individual neuron to stimuli within its receptive field can be approximated mathematically by a convolution, so CNNs extensively make use of convolution. A convolution includes a plurality of combinational operations which can be denoted as inner products of vectors. These combinational operations may, in turn, include multiple arithmetic operations between numerical values. A convolution may be defined with respect to a certain kernel. According to examples, a convolution may be between a 3-D kernel - or, generally, a 3-D filter - and a 3-D input feature map. Hence, a convolution includes a plurality of combinational operations, i.e., applying 2-D channels of the 3-D kernel - or, generally, 2-D filter coefficients - to 2-D sections of a 3-D receptive field associated with a certain neuron; such applying of 2-D channels to 2-D sections may include multiple arithmetic operations. e.g., multiplication and adding operations. In particular, such applying of 2-D channels to 2-D sections may correspond to an inner product of two vectors.

A CNN is formed by stacking multiple layers that transform the input data into an appropriate output data, e.g., holding the class scores. The CNN may include layers which are selected from the group of layer types including: Convolutional Layer, Pooling Layer, Non-Linear Activation Layer, Adding Layer, Concatenation Layer, Fully-connected Layer. As opposed to conventional multi-layer perceptron neural networks, CNN are typically characterized by the following features: (i) 3-D volume of neurons: the layers of a CNN have neurons arranged in 3-D: width, height and depth. The neurons inside a layer are selectively connected to a sub-region of the input feature map obtained from the previous layer, called a receptive field. Distinct types of layers, both locally and completely connected, are stacked to form a CNN. (ii) Local connectivity: following the concept of receptive fields, CNNs typically exploit spatially local correlation by enforcing a local connectivity pattern between neurons of adjacent layers. The architecture thus ensures that the learnt filters produce the strongest response to a spatially local input pattern. Stacking many such layers leads to non-linear filters that become increasingly global, i.e. responsive to a larger regions. This helps to take into-account inter-relationships between different low-level features: This allows the network to first create good representations of small parts of the input, and then assemble representations of larger areas from them. (iii) Shared weights: in CNNs, each filter is replicated across the entire input feature map. Such replications - separated by a stride and forming a set of combinational operations - thus share the same filter coefficients (weight vector and bias) and form an output feature map. This results in the neurons of a given convolutional layer detecting the same feature - defined by the filter coefficients. Replicating units in this way allows for features to be detected regardless of their position in the visual field, thus constituting the property of translational invariance. Such properties typically allow CNNs to achieve good generalization. CNNs are widely applied for object recognition in image data (vision).

Various techniques described herein are based on the finding that the computational resources, in particular in terms of memory access and data movement can be significant when implementing object recognition using multi-layer neural networks such as CNNs. For example, this may require a large number of read/write events from and to an external memory. Data movement between computational units integrated on a chip and external memory not integrated on the chip can be comparably slow and require significant time. Therefore, various techniques described herein facilitate reducing the data movement between the computational units and the off-chip memory.

While, hereinafter, reference is primarily made to CNNs for sake of simplicity, generally, such techniques may be readily applied to different types of neural networks. This applies to scenarios, in particular, where the size of the filter map and / or the input feature map changes from layer to layer of the multi-layer neural network. The techniques described herein are based on the finding that various types of neural networks rely on filter operations between an input feature map and a filter map. In convolutional layers of a CNN, these filter operations are implemented by the convolutions. However, generally, different types and kinds of filter operations may benefit from the techniques described herein. Other examples of filter operations include operations associated with fully-connected layers, pooling layers, adding layers, and/or concatenation layers. The different types of filter operations may all rely on arithmetic operations.

The techniques described herein may be of particular use for multi-layer filter networks which iteratively employ multiple filters, wherein a succeeding iteration employs data output by a succeeding iteration. Hence, while reference is made primarily to convolutional layers of CNNs hereinafter, such techniques may be applied to other kinds and types of layers of CNNs, e.g., fully-connected layers.

Hereinafter, techniques of efficiently perform filter operations related to object recognition are described. These techniques may provide for reduced processing time and efficient allocation of computational units. Idle times of the computational units may be avoided. Alternatively or additionally, these techniques may provide for reduced data movement from and to an external memory.

Various techniques are based on the finding that for object recognition it is often required to perform filter operations between an input feature map and a filter map, wherein the filter operations each include a plurality of arithmetic operations. The arithmetic operations can relate to combining a value of a first data stream associated with the input feature map and a value of a second data stream associated with the filter map. The values of corresponding positions are combined. The values of the data streams may correspond to numerical values, e.g., in a 16-bit or 32-bit word length. The data streams may be indicative of the underlying data of the input feature map or the filter map, respectively.

If, for example, at least one of these two values subject to the arithmetic operation is zero, then, an output value can equal zero as well. For example, a typical arithmetic operation which yields an output zero value if there is at least one zero value in the input corresponds to multiplication.

In the connection with CNNs, often the filter operations correspond to 3D convolutions between receptive fields of the input feature map and kernels of the filter map, e.g., in a convolutional layer of the CNN. The 3D convolutions may include multiple multiplications as arithmetic operations.

Each computational unit may receive - based on routing - values of a first data stream and values of a second data stream and provide an output data stream based on the arithmetic operations between the values of the first and second data streams. The output data stream is indicative of data of an output feature map. For example, it is possible that in a multi-layer neural network the output feature map of a preceding layer serves as the input feature map of a succeeding layer. Sometimes, the data stream indicative of the input feature map of a succeeding layer may be determined based on the output data stream of the preceding layer.

To speed up the processing of the filter operations such as the 3D convolutions, according to examples, coincident non-zero values at corresponding positions are detected in the data streams indicative of the data of the input feature map and indicative of the data of the filter map. Then, it is possible to route the data streams to the computational units depending on said detecting of the coincident non-zero values. The computational units may then perform the arithmetic operations in accordance with the data streams routed thereto. For example, it would be possible to exclusively route the coincident non-zero values to the plurality of computational units; hence, it would be possible that any values other than coincident non-zero values are not routed to the computational units. Hence, it would be possible to skip processing of any values other than coincident non-zero values. For example, it would be possible to skip such positions of the data streams when routing at which only one of the data streams or even none of the data streams have non-zero values.

Such techniques can further benefit from a run-length encoding of zero values in the data streams according to a compression algorithm. This encoding may be lossless. In other words, it may be sufficient to retain the non-zero values in the data streams; and crop or prune the zero values from the data streams. This may be based on the finding that zero values of a data stream are not routed to the computational units, not even in combination with a non-zero value in a further data stream.

For example, the data streams may include first and second sections, respectively. The first sections may include the non-zero values (and may not include the zero values); while the second sections may be indicative of the positions of the non-zero values within the data stream. For example, the second section may include control data indicative of the positions of the zero values cropped from the data streams and/or indicative of the positions of the non-zero values. This may facilitate reconstructing which zero values have been cropped.

If the zero values are cropped from the data stream, then positions in the data stream may be missing due to the compression. Thus, by means of the second sections it may be possible to resemble the positions of the non-zero values in the data stream, even if the positions of the zero values are not included. Based on this information on the position of the non-zero values, it is then possible to conclude how many zero values have been cropped from the data stream.

For example, the second section may be represented as a vector including multiple bits, wherein each bit is indicative of whether a certain position within the data stream carries a zero value or a non-zero value. The second section, on the other hand, may not be indicative of the non-zero values themselves. Thus, a one-bit vector may be used. In another example, in order to keep track of the zero values cropped from the data streams - i.e., to keep track of the positions of the non-zero values in the data streams -, it would also be possible to determine control data when cropping the zero value which is indicative of said cropping. For example, the control data may be indicative of the positions of non-zero values not cropped from the data stream.

The control data may be written to an on-chip memory. Because the output data stream of a given layer of a neural network may serve as the input data stream of a subsequent layer of the neural network, it is then possible to refer back to the control data once the output data stream is processed as an input data stream. For example, the control data indicative of zero values may be kept in an on-chip memory while the corresponding output data stream is routed from the computational units to an off-chip memory. Subsequently, a data stream indicative of the input feature map of the succeeding layer of the multi-layer neural network may be retrieved from the off-chip memory. This data stream may be based on the output data stream of the preceding layer. Detection of the coincident non-zero values may then be controlled based on the control data. In other examples, it may also be possible that the control data is at least partly and/or at least temporarily stored in an off-chip memory.

The control data could also be attached to the output data stream, e.g., in a specific section which is indicative of the positions of the non-zero values in a further section of the output data stream.

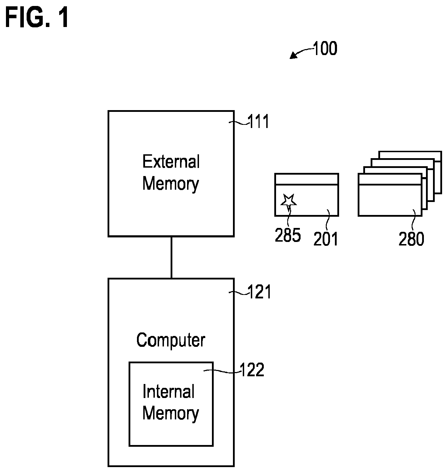

FIG. 1 schematically illustrates aspects with respect to the circuit 100 that can be configured to implement a neural network. For example, the circuit 100 could be implemented by an ASIC or FPGA.

The circuit 100 includes a computer 121 that may be integrated on a single chip/die which includes an on-chip/internal memory 122. For example, the internal memory 122 could be implemented by cache or buffer memory. The circuit 100 also includes external memory 111, e.g., DDR3 RAM. The external memory 111 is not integrated on the chip of the computer 121 and, therefore, may be referred to as off-chip memory 111.

FIG. 1 schematically illustrates input data 201 which is representing an object 285. For example, in case of the input data 201 being image data, the object 285 may be depicted in the input data 201. For example, in case of the input data 201 being sound data, the object 285 may be a sound pattern in a music track, etc.. The circuit 100 is configured to recognize and classify the object 285. For this, the input data 201 is processed. In particular, a set of filter maps 280 is stored in the external memory 111. Each filter map 280 includes a plurality of filters, e.g., kernels for the convolutional layers of a CNN. Each filter map 280 is associated with a corresponding layer of a multi-layer neural network, e.g., a CNN. The filter maps 280 of different layers can be of different size. For example, there may be some layers which have significantly larger filter maps and other layers, e.g., at least 20% large in size, where at least 70% large in size, or even more than 200% large in size.

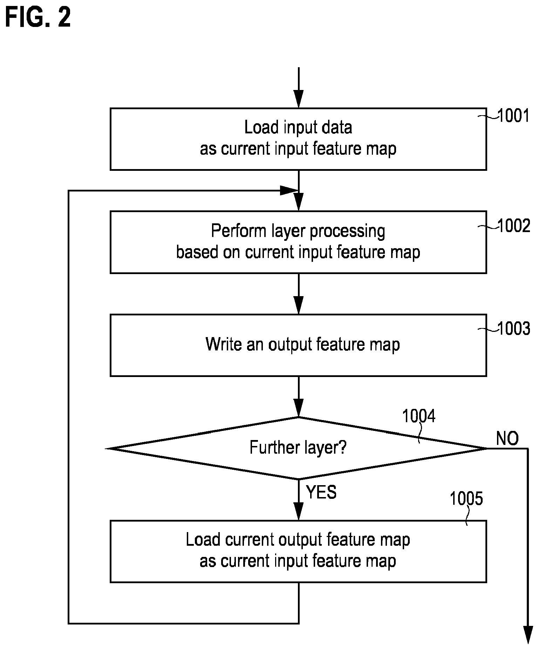

FIG. 2 is a flowchart of a method. The method of FIG. 2 illustrates aspects with respect to processing of the input data 201. FIG. 2 illustrates aspects with respect to iteratively processing the input data 201 using multiple filters.

First, in 1001, the input data 201 is read as a current input feature map. For example, the input data may be read from the external memory 111. For example, the input data 201 may be retrieved from a sensor. For example, reading the input data may include routing a data stream which is indicative of data of the input feature map.

Data streams, as described with respect to the various examples herein, may include a sequence of values. For example, individual positions of a data stream may represent the respective value by using one or more bits, e.g., 16-bit or 32-bit or 64-bit (word length).

Next, in 1002, layer processing is performed based on the current input feature map. Each layer, i.e., each execution of 1002, corresponds to an iteration of the analysis of the data. Different iterations of 1002 may be associated with different requirements for computational resources, e.g., in terms of processing power vs. memory access requirements.

Depending on the particular layer associated with the current iteration of 1002 such layer processing may include one or more filter operations between the current input feature map and the filters of the respective filter map 280.

Next, in 1003, an output feature map is written. For example, the output feature map may be written to the external memory 111. Writing the output feature map may include routing and output data stream which is indicative of data of the output feature map.

In 1004 it is checked whether the CNN includes a further layer. If this is not the case, then the current output feature map of the current iteration of 1003 is output; the current output feature map then provides classification of the object 285.

Otherwise, in 1005 the current output feature map is read as the current input feature map, e.g., from the external memory 111. Then, 1002 - 1004 are re-executed in a next iteration. Again, a respective data stream may be routed.

From the method according to the example of FIG. 2, it becomes apparent that different input feature maps may have different sizes.

From the method according to the example of FIG. 2, it becomes, furthermore, apparent that processing of the input data requires multiple read and multiple write operations to the external memory 111, e.g., for different iterations of 1002 or even multiple times per iteration 1002. Such data movement can be energy inefficient and may require significant time. According to examples described herein, it is possible to reduce such data movement. In particular, according to various examples described herein, it is possible to reduce such data movements by applying compression to data streams routed from the external memory 111 and/or routed to the external memory 111. For example, run-length encoding of zero positions in the data streams may be employed. The data may be stored in compressed form in the external memory 111.

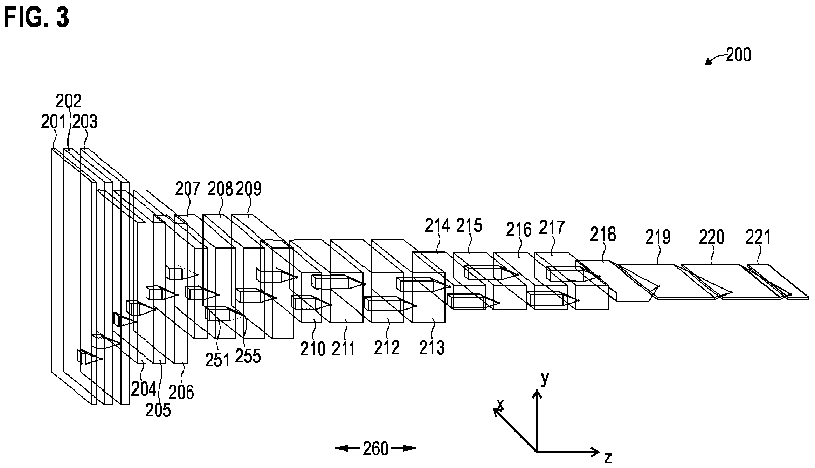

FIG. 3 illustrates aspects with respect to a CNN 200. The CNN includes a count of sixteen layers 260. FIG. 3 illustrates the input data 201 converted to a respective input feature map. The first layer 260 which receives the input data is typically called an input layer.

The feature maps 202, 203, 205, 206, 208, 209, 211 - 213, 215 - 217 are associated with convolutional layers 260.

The feature maps 204, 207, 210, 214 are associated with pooling layers 260.

The feature maps 219, 220 are associated with fully-connected layers 260.

The output data 221 corresponds to the output feature map of the last fully connected layer 260. The last layer which outputs the output data is typically called an output layer. Layers 260 between the input layer and the exit layer are sometimes referred to as hidden layers 260.

The output feature maps of every convolutional layer 260 and of at least some of the fully-connected layers are post-processed using a non-linear post-processing function (not shown in FIG. 3), e.g., a rectified linear activation function and/or a softmax activation function. Sometimes, dedicated layers can be provided for non-linear post-processing (not shown in FIG. 3).

FIG. 3 also illustrates the receptive fields 251 of neurons 255 of the various layers 260. The lateral size (xy-plane) of the receptive fields 251 - and thus of the corresponding kernels - is the same for all layers 200, e.g., 3x3 neurons. Generally, different layers 260 could rely on kernels and receptive fields having different lateral sizes.

In the example of FIG. 3, the various convolutional layers 260 employ receptive fields and kernels having different depth dimensions (z-axis). For example, in FIG. 3, the smallest depth dimensions equals to 3 neurons while the largest depth dimensions equals to 512 neurons.

The pooling layers 260 employ 2x2 pooling kernels of different depths. Similar to convolutional layers, different pooling layers may use different sized pooling kernels and / or stride size. The size of 2x2 is an example, only.

For example, the CNN 200 according to the example of FIG. 3 and also of the various further examples described herein may have about 15,000,000 neurons, 138,000,000 network parameters and may require more than 15,000,000,000 our arithmetic operations. As illustrated in FIG. 3, the input feature maps 201 -220 are all of different dimensions and of different sizes. Likewise, also the kernel maps (not shown in FIG. 3) can be of different dimensions and sizes.

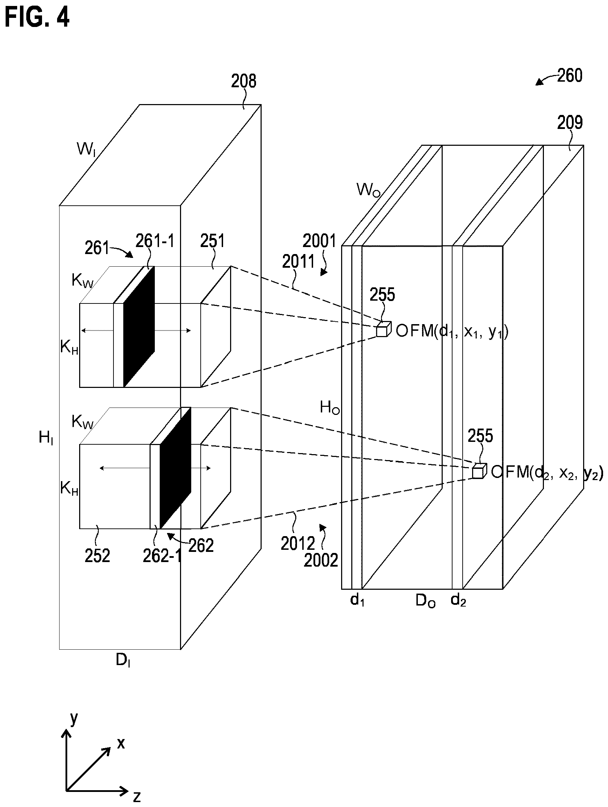

FIG. 4 illustrates aspects with respect to a convolutional layer 260. In the example of FIG. 4, the input feature map 208 is processed to obtain the output feature map 209 of the convolutional layer 260.

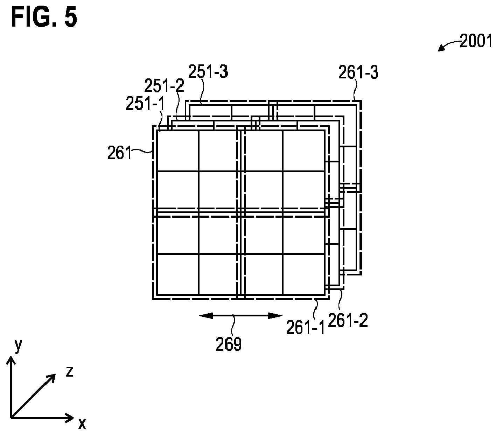

Convolutional layers 260 can be seen as the core building blocks of a CNN 200. The convolutional layers 260 are associated with a set of learnable 3-D filters - also called kernels 261, 262 - stored in a filter map. Each filter has limited lateral dimensions (xy-plane) - associated with the small receptive field 251, 252 typical for the convolutional layers -, but typically extend through the full depth of the input feature map (in FIG. 4, only 2-D slices 261-1, 262-1 of the kernels 261, 262 are illustrated for sake of simplicity, but the arrows along z-axis indicate that the kernels 261, 262 are, in fact, 3-D structures; also cf. FIG. 5 which illustrates multiple slices 261-1 - 261-3 of the kernel 261 being applied to different slices 251-1 - 251-3 of the receptive field 251). The different kernels 261, 262 are each associated with a plurality of combinational operations 2011, 2012; the various combinational operations 2011, 2012 of a kernel 261, 262 correspond to different receptive fields 251 (in FIG. 5, per kernel 261, 262 a single combinational operation 2011, 2012 corresponding to a given receptive field 251, 252 is illustrated). In other words, each kernel 261, 262 will be applied to different receptive fields 251, 252; each such application of a kernel 261, 262 to a certain receptive field defines a respective combinational operation 2011, 2012 between the respective kernel 261, 262 and the respective receptive field 251, 252.

As illustrated in FIG. 4, each kernel 261, 262 is convolved across the width and height of the input feature map 208 (in FIG. 4, only a single position of the kernels 261, 262 is illustrated for sake of simplicity), computing the inner vector product (sometimes also referred to as dot product) between the slices 261-1, 262-1 of the kernels 261, 262 and the slices of the respective receptive fields 251, 262 of the input feature map. Each kernel 261, 262 defines a corresponding filter operation in the form of a convolution 2001, 2002, but each convolution 2001, 2002, in turn, includes multiple combinational operations corresponding to the different receptive fields. This produces a 2-D activation map of that kernel 261, 262. As a result, kernels 261, 262 activate when detecting some specific type of feature at some spatial position in the input feature map.

Stacking such activation maps for all kernels 261, 262 along the depth dimension (z-axis) forms the full output feature map 209 of the convolution layer 260. Every entry in the output feature map 209 can thus also be interpreted as a neuron 255 that perceives a small receptive field of the input feature map 208 and shares parameters with neurons 255 in the same slice of the output feature map.

Often, when dealing with high-dimensional inputs such as images, it may be undesirable to connect neurons 255 of the current convolutional layer to all neurons 255 of the previous layer, because such network architecture does not take the spatial structure of the data into account. CNNs exploit spatially local correlation by enforcing a local connectivity pattern between the neurons 255 of adjacent layers 260: each neuron is connected to only a small region of the input feature map. The extent of this connectivity is a parameter called the receptive field of the neuron. The connections are local in space (along width and height of the input feature map), but typically extend along the entire depth of the input feature map. Such architecture ensures that the learnt filters produce the strongest response to a spatially local input pattern.

In some examples, three parameters control the size of the output feature map of the convolutional layer: the (i) depth, (ii) stride, and (iii) zero-padding: (i) Depth ($D$) parameter of the output feature map controls the number of neurons 255 in the current layer 260 that connect to the same receptive field 251, 252 of the input feature map 208. All of these neurons 255 activate for different features in the input feature map 208 by relying on different kernels 261, 262. Different convolutions 2001, 2002 are implemented for different kernels. (ii) The Stride (*S*) parameter controls how receptive fields 251, 252 of different neurons 255 slide around the lateral dimensions (width and height; xy-plane) of the input feature map 208. When the stride is set to 1, the receptive fields 251, 252 of adjacent neurons are located at spatial positions only 1 spatial unit apart (horizontally, vertically or both). This leads to heavily overlapping receptive fields 251, 252 between the neurons, and also to large output feature maps 209. Conversely, if higher strides are used then the receptive fields will overlap less and the resulting output feature map 209 will have smaller lateral dimensions (cf. FIG. 5 which illustrates a stride size 269 of two). (iii) Sometimes it is convenient to pad the input feature map 208 with zeros on the border of the input volume. The size of this zero-padding (*P*) is a third parameter. Zero padding provides control of the output volume spatial size. In particular, sometimes it is desirable to exactly preserve the spatial size of the input feature map in the output feature map.

The spatial size of the output feature map 209 can be computed as a function of the input feature map 208 whose width is *W* and height is *H*, the kernel field size of the convolutional layer neurons is $K_W x K_H$, the stride with which they are applied *S*, and the amount of zero padding *P* used on the border. The number of neurons that "fit" a given output feature map is given by

$$((W - K_W + 2P)/S + 1)x((H - K_H + 2P)/S + 1) \tag{1}$$

If this number is not an integer, then the strides are set incorrectly and the neurons cannot be tiled to fit across the input feature map in a symmetric way. In general, setting zero padding to be *P*=(*K*-1)/2 when the stride is *S*=1 ensures that the input volume and output volume will have the same size spatially. This is a very common situation in most of the currently used CNNs.

Weight sharing scheme is used in convolutional layers to control the number of free parameters. It relies on one reasonable assumption: That if one kernel feature is useful to compute at some spatial position, then it should also be useful to compute at a different position. In other words, denoting a single 2-dimensional slice of depth one as a depth slice of the output feature map, it is possible to constrain the neurons 255 in each depth slice of the output feature map 209 to use the same weights and bias, i.e., the same kernel.

Since all neurons 255 in a single depth slice of the output feature map 209 are sharing the same kernel 261, 262, then the forward pass in each depth slice of the convolutional layer can be computed as a 3D convolution 2001, 2002 of the neurons' 255 weights (kernel coefficients) with the section of the input volume including its receptive field 251, 252:

$$OFM[z][x][y] = B[z] + \sum_{k=0}^{K_D-1} \sum_{i=0}^{K_W-1} \sum_{j=0}^{K_H-1} IFM[k][Sx+i][Sy+j] \cdot Kernel[z][k][i][j], \tag{2}$$

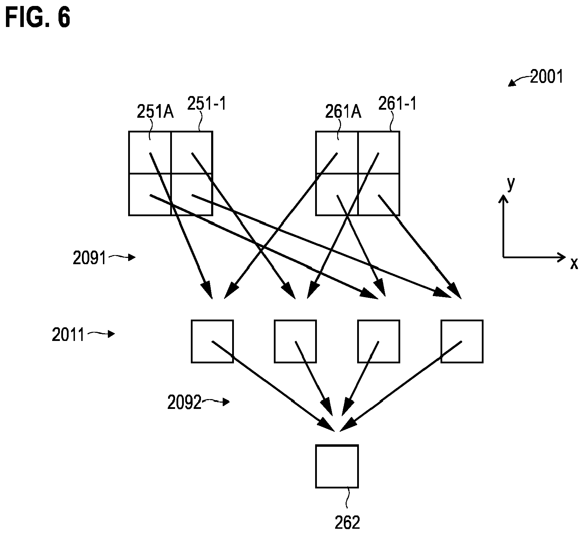

where $0 \leq z < D_O, 0 \leq x < W_O = \dfrac{W_I - K_W + 2P}{S}, 0 \leq y < H_O = \dfrac{H_I - K_H + 2P}{S}$ (cf. FIG. 6 which illustrates the pairwise multiplication 2091 and summation 2092 between weights 261A of the kernel slice 261-1 and elements 251A of the slice 251-1 receptive field 251 as arithmetic operations.

Here, *IFM* and *OFM* are 3-D input feature map 208 and output feature map 209, respectively; $W_I$, $H_I$, $D_I$, $W_O$, $H_O$ and $D_O$ are the width, height and depth of the input and output feature map 208, 209, respectively; *B* is the bias value for each kernel 261, 262 from the kernel map; *Kernel* is the kernel map; $K_W$, $K_H$ and $K_D$ are the width, height and depth of every kernel 261, 262 respectively.

From Eq. 2 it is apparent that each convolution 2001, 2002 - defined by a certain value of parameter *z* - includes a plurality of combinational operations 2011, 2012, i.e., the sums defining the inner vector product. The various combinational operations 2011, 2012 correspond to different neurons 255 of the output feature map 209, i.e., different values of *x* and *y* in Eq. 2. Each combinational operation 2011, 2012 can be broken down into a plurality of arithmetic operations, i.e., multiplications and sums (cf. FIG. 6).

FIG. 4 illustrates how the process of calculating 3-D convolutions 2001, 2002 is performed. For each neuron 255 in the output feature map 209, located at the same depth slice, the same 3-D kernel 261, 261 is being used when calculating the 3-D convolution. What differ between the neurons 255 from the same depth slice are the 3-D receptive fields 251, 252 used in the 3-D convolution. For example, the neuron 255 ($d_1$, $x_1$, $y_1$) uses 3-D kernel 261 *Kernel*($d_1$) and receptive field 251. All neurons 255 of the output feature map 209 located in the depth slice $d_1$ use the same kernel 261 *Kernel*($d_1$), i.e., are associated with the same 3-D convolution 2001. In a different slice of the output feature map 209, for example the depth slice $d_2$, a different 3-D kernel 262 *Kernel($d_2$)* is used. In other words: neurons 255 of the output feature map 209 with identical spatial coordinates, (*x, y*), located in different depth slices, use identical receptive fields 251, 252 of the input feature map 208, but different 3-D kernels 261, 262. So, for example, output feature map neurons OFM($d_1$, $x_1$, $y_1$) and OFM($d_2$, $x_1$, $y_1$) would use the same 3-D receptive field 251, 262 from the input feature map, but different 3-D kernels 261, 262 , *Kernel($d_1$)* and *Kernel($d_2$)* respectively.

It is common to refer to the sets of weights as a kernel 261, 262 - or generally as a filter -, which is convolved with the different receptive fields 251, 252 of the input feature map 208. The result of this convolution is an activation map, and the set of activation maps for each different filter are stacked together along the depth dimension to produce the output feature map 209 of the convolution layer.

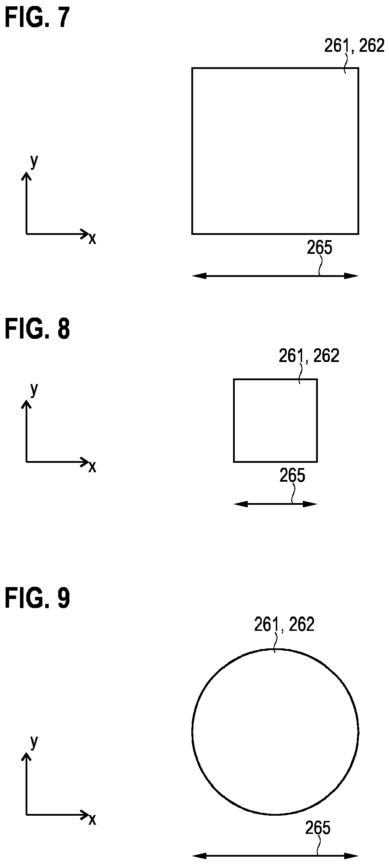

Above, various examples have been described with the kernels 261, 262 have a certain kernel geometry. FIGs. 7 - 9 illustrate aspects with respect to different kernel geometries. For example, FIG. 7 illustrates a slice of a kernel 261, 262 having a cuboid shape. From a comparison of FIGs. 7 and 8, it can be seen that different kernel geometries may be achieved by varying the size 265 of the respective kernel 261, 262. Furthermore, from a comparison of FIGs. 7 and 8 versus FIG. 9 it can be seen that different kernel geometries may be achieved by varying the 3-D shape of the kernel 261, 262, i.e., cuboid in FIGs. 7 and 8 and spherical in FIG. 9. Generally, it would be possible to achieve different kernel geometries by varying the lateral cross-section in xy-plane only.

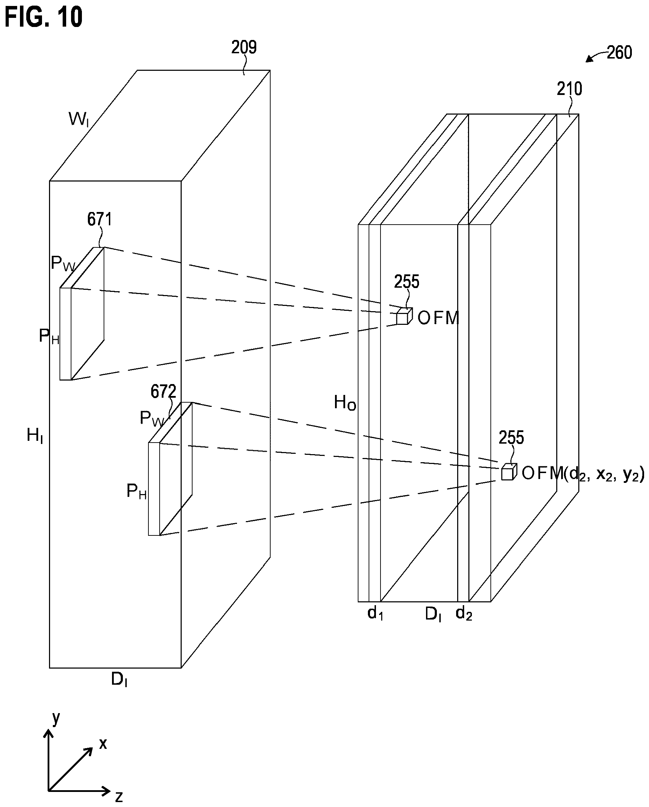

FIG. 10 illustrates aspects with respect to a pooling layer 260 which performs a filter operation in the form of pooling. Pooling is generally a form of non-linear down-sampling. The intuition is that once a feature has been found, its exact location may not be as important as its rough location relative to other features, i.e., its spatial inter-relationship to other features. The pooling layer 260 operates independently on every depth slice of the input feature map 209 and resizes it spatially. The function of the pooling layer 260 is to progressively reduce the spatial size of the representation to reduce the amount of parameters and computation in the CNN 200, and hence to also control overfitting. Pooling layers 260 may be inserted in-between successive convolutional layers 260. The pooling operation provides a form of translation invariance.

There are several non-linear functions to implement pooling:

(i) Max pooling partitions the input feature map 209 into a set of non-overlapping pooling regions 671, 672 of size $P_W \times P_H$ (these sub-regions are usually rectangles) and, for each such pooling region 671, 672, outputs the maximum value of the input feature map points located within it

$$OFM[z][x][y] = \max_{\substack{0 \le i < P_W - 1 \\ 0 \le j < P_H - 1}} \{IFM[z][Sx+i][Sy+j]\},$$

$$0 \le z < D, 0 \le x < W = \frac{W - P_W}{S}, 0 \le y < H = \frac{H - P_H}{S} \tag{3}$$

This is illustrated in FIG. 10 for two neurons 255 associated with different pooling regions 671, 672.

An example is a pooling layer with filters of size 2x2 applied with a stride of 2 which downsamples at every depth slice the spatial size of input feature map 209 by a factor of 2 along both width and height, discarding in the process 75% of the input feature map values within every 2x2 sub-region. Every *max* operation would in this case be taking a max over 4 numbers. The depth dimension remains unchanged.

(ii) Average pooling partitions the input feature map 209 into a non-overlapping sub-regions and for each sub-region outputs the average value of input feature map points located within it.

$$OFM[z][x][y] = \frac{1}{P_W \cdot P_H} \cdot \sum_{i=0}^{P_W - 1} \sum_{j=0}^{P_H - 1} IFM[z][Sx+i][Sy+j],$$

$$0 \le z < D, 0 \le x < W = \frac{W - P_W}{S}, 0 \le y < H = \frac{H - P_H}{S} \tag{4}$$

(iii) $L^2$-norm pooling partitions the input feature map 209 into a non-overlapping sub-regions and for each sub-region outputs the L2-norm values of input feature map points located within it, defined by

$$OFM[z][x][y] = \sqrt{\sum_{i=0}^{P_W-1}\sum_{j=0}^{P_H-1}\left(IFM[z][Sx+i][Sy+j]\right)^2},$$

$$0 \le z < D, 0 \le x < W = \frac{W-P_W}{S}, 0 \le y < H = \frac{H-P_H}{S}$$

(5)

Pooling is performed on depth slice by depth slice basis within the pooling layer 260, as can be seen from the FIG. 10. Each neuron 255 of the output feature map 210, irrelevant of its lateral position in the xy-plane, uses identical 2D pooling region 671, 672, but applied to different slices of the input feature map 209, because similar to the convolutional layer each neuron from the pooling layer has its own unique region of interest. By applying selected non-linear pooling function to the values from the current 2-D pooling region 671, 672 of the input feature map 209, a resulting value from the output feature map 210 is calculated.

In general, every pooling layer 260: (i) Accepts an input feature map of size $W_I \times H_I \times D_I$; (ii) Requires two parameters: spatial extent of the pooling sub-region 671, 672 $P_W \times P_H$ and the stride $S$; Produces an output feature map of size $W_O \times H_O \times D_O$ where: $W_O=(W_I-P_W)/S+1$, $H_O=(H_I-P_H)/S+1$, $D_O=D_I$; and introduces zero parameters, since it computes a fixed function of the input feature map 209.

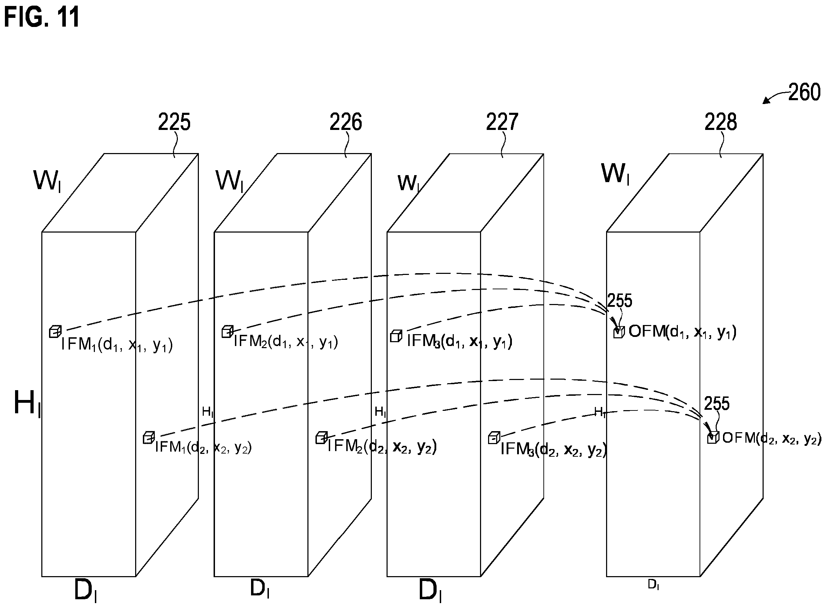

FIG. 11 illustrates aspects with respect to an adding layer 260 which performs a filter operation in the form of an point-wise addition of two or more input feature maps 225-227 to yield a corresponding output feature map 228. In general, every adding layer 260 accepts two or more input feature maps 225-227, each of size WI×HI×DI, Produces an output feature map 228 of size WO×HO×DO where: WO=WI, HO=HI, DO=DI; and introduces zero parameters, since it computes a fixed function of the input feature map.

As can be seen from the FIG. 11, each neuron 255 of the output feature map 228, OFM($d$, $x$, $y$) actually represents a sum of neurons from all input feature maps 225-227 located at the same location within the input feature map 225-228. For example, in FIG. 11 the neuron 255 OFM($d_1$, $x_1$, $y_1$) of the output feature map 228 is calculated as the sum of neurons of the input feature maps 225 - 227 located at the same coordinates, i.e., as

$$IFM_1(d_1, x_1, y_1) + IFM_2(d_1, x_1, y_1) + IFM_3(d_1, x_1, y_1).$$

(6)

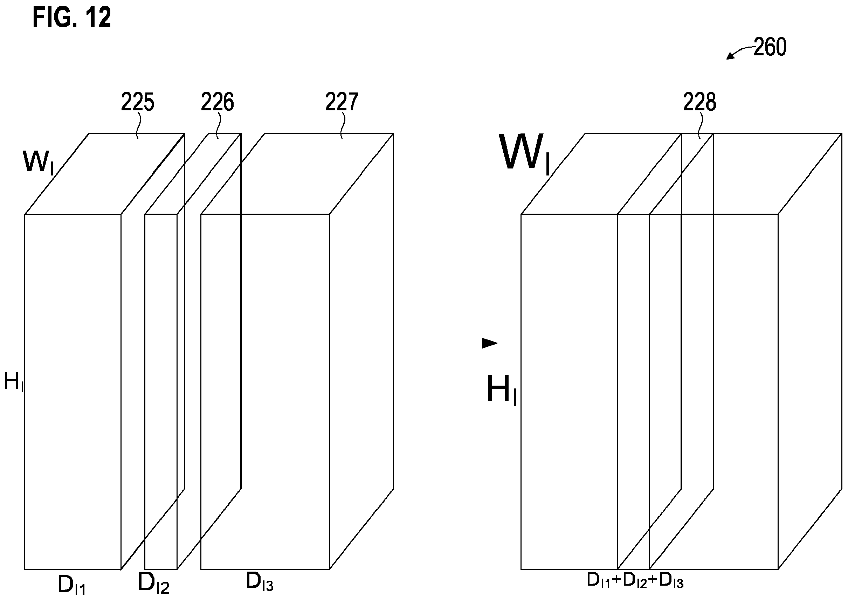

FIG. 12 illustrates aspects with respect to a concatenation layer 260. The concatenation layer concatenates two or more input feature maps 225-227, usually along the depth axis and, thereby, implements a corresponding filter operation. In general, every concatenation layer accepts $N$ input feature maps 225-227, each of them with identical spatial size $W_I \times H_I$, but with possibly different depths $D_{I1}$, $D_{I2}$, ..., $D_{IN}$: produces an output feature map 228 of size $W_O \times H_O \times D_O$ where: $W_O=W_I$, $H_O=H_I$, $D_O=D_{I1} + D_{I2} + ... + D_{IN}$; and introduces zero parameters, since it computes a fixed function of the input feature maps 225-227.

From FIG. 12 it is apparent that within the concatenation layer 260 of the CNN 200, individual input feature maps 225-227 are stacked together to form a single output feature map 228. In the example of FIG. 12, three input feature maps 225-227 are concatenated, resulting in an output feature map 228 OFM which is composed of the three input feature maps 225-227, $IFM_1$, $IFM_2$ and $IFM_3$. The input feature map 225 $IFM_1$ is located at depth slices 1:$DI_1$ within the output feature map 228, then comes the input feature map 226 $IFM_2$, located at depth slices ($DI_1$+1):($DI_1$+$DI_2$) within the output feature map 228, while input feature map 227 $IFM_3$ is located at depth slices ($DI_1$+$DI_2$+1):($DI_1$+$DI_2$+$DI_3$) of the output feature map 228.

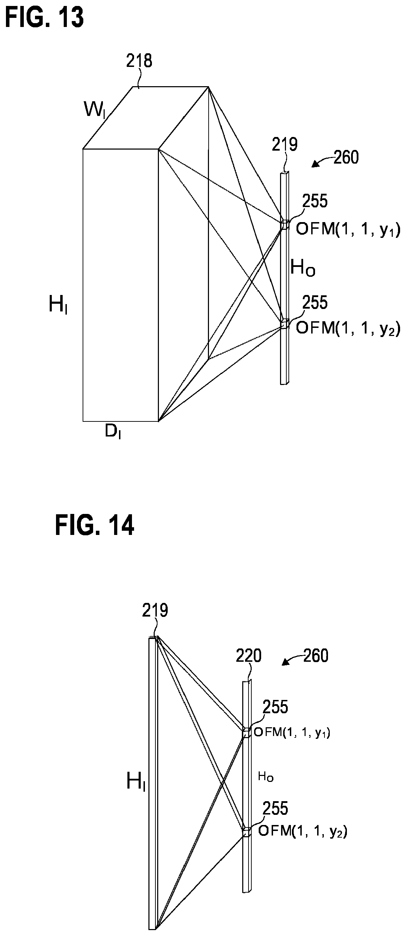

FIGs. 13 and 14 illustrate aspects with respect to fully-connected layers. Typically the high-level reasoning in the CNN 200 is done by means of fully connected layers 260. Neurons 255 in a fully connected layer 260 have full connections to all neurons 255 in the respective input feature map 218, 219. Their activations can hence be computed with a filter operation implemented by a matrix multiplication as arithmetic operations followed by a bias offset:

$$OFM[n] = A_f\left(B[n] + \sum_{k=0}^{D_I-1}\sum_{i=0}^{W_I-1}\sum_{j=0}^{H_I-1} IFM[k][i][j] \cdot Weight[n][k][i][j]\right); 0 \le n \le N$$

(7)

or

$$OFM[n] = A_f\left( B[n] + \sum_{i=0}^{N_I-1} IFM\,[i] \cdot Weight\,[n][i] \right); 0 \le n \le N \qquad (8)$$

where Eq. 7 applies to a scenario where the input feature map 218 is associated with a not-fully connected layer 260 (cf. FIG. 13) while Eq. 8 applies to a scenario where the input feature map 219 is associated with a fully connected layer 260 (cf. FIG. 14).

Furthermore, because there is no weight sharing the memory access requirements can be comparably high, in particular if compared to executing Eq. 2 for a convolutional layer.

Typically, the accumulated weighted sums for all neurons 255 of the fully-connected layer 260 are passed through some non-linear activation function, $A_f$. Activation functions which are most commonly used within the fully-connected layer are the ReLU, Sigmoid and Softmax functions.

FIGs. 13 and 14 illustrate that every neuron 255 of the respective output feature map 219, 220 is determined based on all values of the respective input feature map 218, 219. What is different between neurons 255 from the fully-connected layer are the weight values that are used to modify input feature map values 218, 219. Each neuron 255 of the output feature map 219, 220 uses its own unique set of weights. In other words, the receptive fields of all neurons 255 of an output feature map 219, 220 of a fully-connected layer 260 are identically spanning entire input feature map 218, 219, but different neurons 255 us different kernels.

In general, every fully-connected layer: Accepts an input feature map 219, 220 of size WI×HI×DI, if the input feature map is the product of the convolutional, pooling, non-linear activation, adding or concatenation layer. If the input feature map is the product of the fully-connected layer, than its size is equal to NI neurons; Produces an output feature map 219, 220 of size NO; introduces a total of WI×HI×DI×NO weights and NxO biases, in case of non-fully-connected input feature maps, or NI×NO weights and N¬O biases, in case of fully-connected input feature maps.

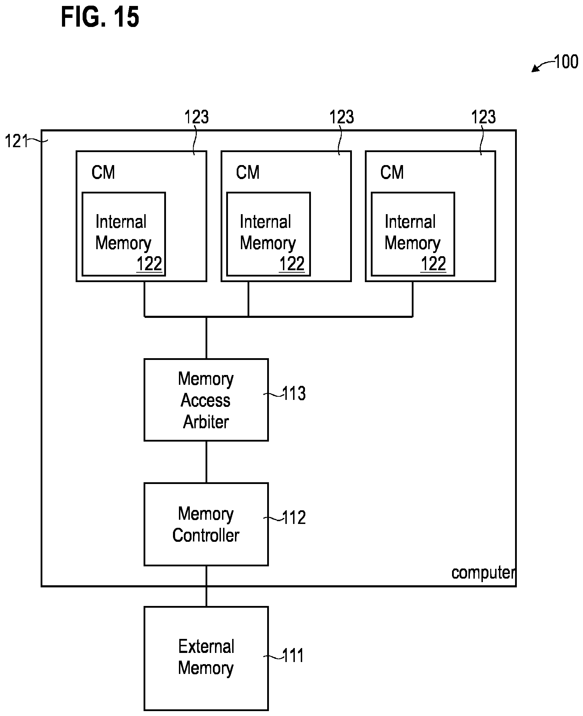

FIG. 15 illustrates aspects with respect to the architecture of the circuit 100. In the example of FIG. 15, the circuit 100 includes a memory controller 112 which controls routing of data streams from and to the external memory 111. Furthermore, a memory access arbiter 113 is provided which distributes data streams between multiple calculation modules (CMs) 123. Each CM 122 may include internal memory 122, i.e., on-chip cache memory 122 which is integrated on the chip of the computer 121. Each CM 122 may include one or more computational units (not illustrated in FIG. 15; sometimes also referred to functional units, FUs), e.g., an array of FUs. The FU array can be re-configured to perform processing for different types of layers 260, e.g., convolutional layer, pooling layer, etc.. This is why the FU array is sometimes also referred to as reconfigurable computing unit (RCU).

In the example of FIG. 15 the circuit 100 includes a plurality of CMs 123 arranged in parallel. In other examples, the circuit 100 could include a plurality of CMs arranged in a network geometry, e.g., a 2-D mesh network (not illustrated in FIG. 15).

By means of multiple CMs 123, different instances of the input data can be processed in parallel. For example, different frames of the video could be assigned to different CMs 123. Pipelined processing may be employed.

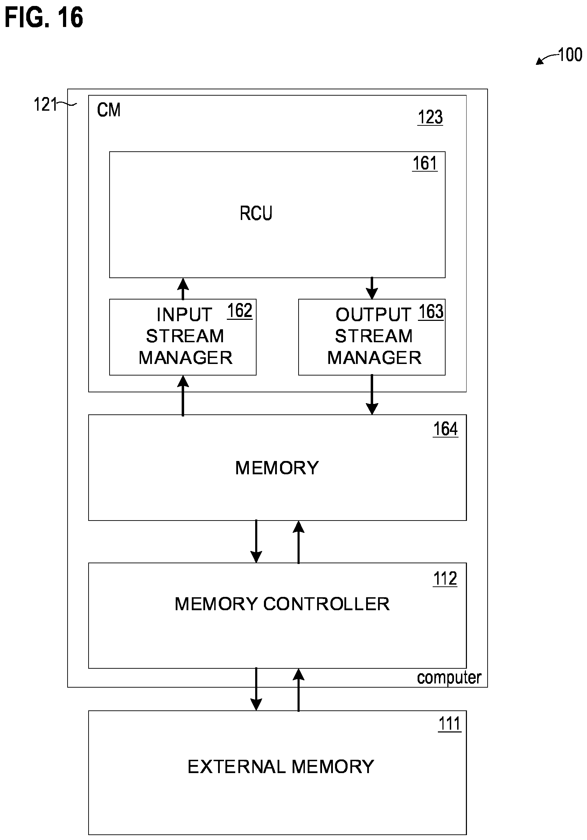

FIG. 16 illustrates aspects with respect to the CMs 123. FIG. 16 illustrates an example where the circuit 100 only includes a single CM 123. However, it would be possible that the circuit 100 includes a larger number of CMs 123.

In the example of FIG. 16, a - generally optional - cache memory 164 is provided on the hierarchy of the computer 121. For example, the cache memory 164 can be level-2 (L2) or level-3 (L3) cache memory.

Typically, the hierarchy between various levels of cache memory are described by the levels. Level-1 (L1) cache memory is arranged closest to the FUs and between the FUs and level-2 cache memory. L2 cache memory is arranged in between the L1 cache memory and L3 cache memory. By providing cache memory, it is possible to buffer data that would be, otherwise, only obtainable from the external memory 111. In particular, by providing the cache memory, it is possible to reduce the number of individual data movement events, because larger chunks of data can be buffered in the cache memory.

The cache memory 164 is configured to cache at least parts of input feature maps and/or output feature maps that are currently processed by the computer 121. For this, the cache memory 164 may buffer respective data streams. This may facilitate power reduction, because read/write to the external memory 111 can be reduced. For example, the cache memory 164 could store all intermediate feature maps 201-220.

Here, a tradeoff between reduced energy consumption and increased on-chip memory may be found.

Furthermore, the CM 123 includes an input stream manager 162 implementing control logic for controlling routing of data streams from the cache memory 164 and/or the external memory 111 to a RCU 161. The CM 123 also includes an output stream manager 163 implementing control logic for controlling routing of data streams to the cache memory 164 and/or the external memory 111 from the RCU 161. The input stream manager 162 is configured to route data streams indicative of data to be processed - such as configuration data, the kernel map, and the input feature map -, coming from the external memory 111 to the proper FU. Here, the input stream manager implements an interface functionality with respect to the external memory 111. The output stream manager 163 is configured to route output data streams indicative of processed data to the external memory 111.

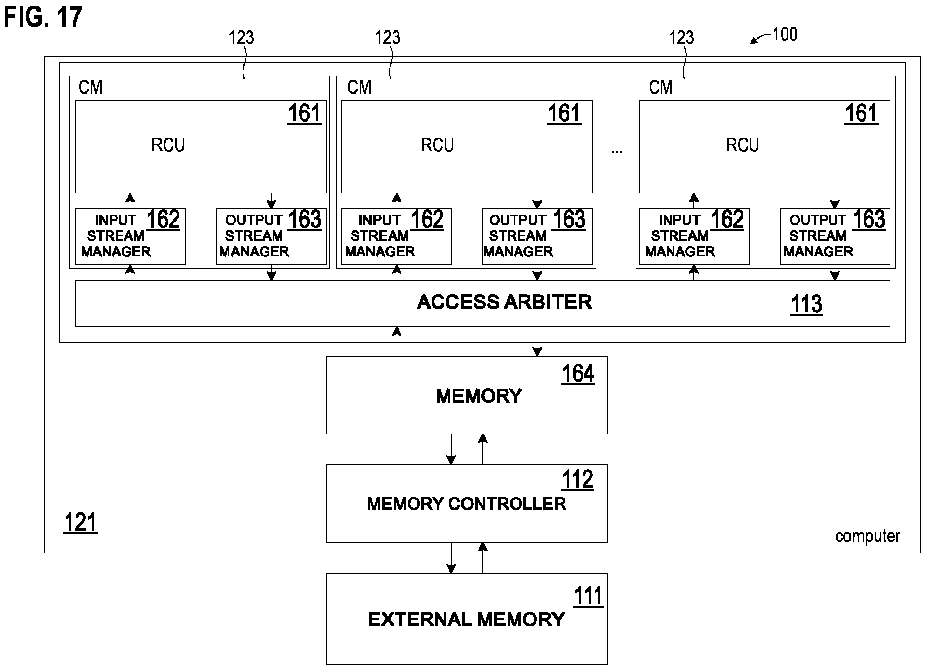

FIG. 17 illustrates aspects with respect to the CMs 123. The example of FIG. 17 generally corresponds to the example of FIG. 16. However, in the example of FIG. 17, a plurality of CMs 123 is provided. This facilitates pipelined or parallel processing of different instances of the input data.

For example, data streams indicative of kernel maps may be shared between multiple CMs 123. For example, if a data stream indicative of a kernel map is unloaded from a first CM 123, this data stream may be routed to a second CM 123. For this, the feature map cache is employed. This helps to avoid frequent read/write operations to the external memory 111 with respect to the kernel maps. This may refer to a pipelined processing of the kernel maps for different instances of input data 200, e.g., relating to different frames of a video etc.. Here, kernel maps 280 are handed from CM 123 to CM 123 instead of moving kernel maps 280 back and forth to and from the external memory 111.

Such sharing of kernel maps between the CMs 123 can relate to parallel processing of different instances of the input data. Here, different CMs 123 use the same kernel map - which is thus shared between multiple CMs 123; and different CMs 123 process different instances of the input data or different feature maps of the input data.

Differently, if CMs 123 use pipelined processing, then every CM 123 uses a different kernel map, because each CM 123 evaluates different CNN layer; here, feature maps will move along the pipeline, sliding one CM mode at a time. In other words, in pipelined processing, different input instances (e.g., different video frames or different images) are at a different stage of processing by the CNN depending where the respective input instance is currently located in the pipeline.

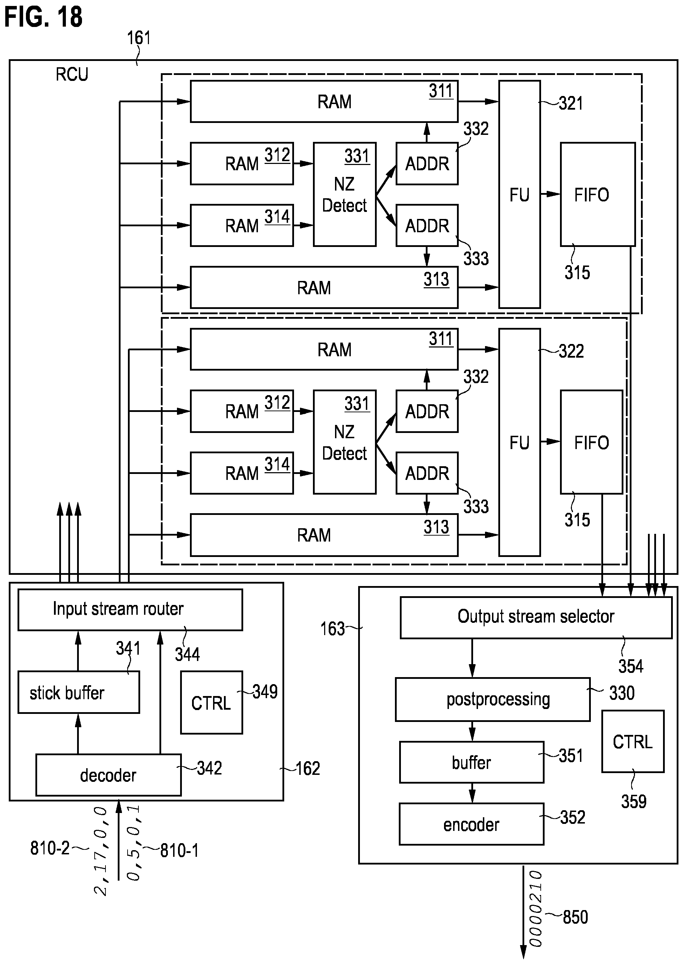

FIG. 18 illustrates aspects with respect to the RCU 161, the input stream manager 162, and the output stream manager 163. Typically, these elements are integrated on a single chip or die and thus form an integrated circuit. Aspects relating to reconfiguring of the RCU 161 are not illustrated in FIG. 18.

The input stream manager 162 receives an input data stream 810-1 and an input data stream 810-2. For example, the input data stream 810-1 may be indicative of the input feature map; while the input data stream 810-2 may be indicative of a kernel 261, 262 to be convoluted with receptive fields 251, 262 of the input feature map.

The input stream manager includes a decoder 342 that may perform decoding to the input data stream 810-1, 810-2. Certain lossless encoding may be applied by an encoder 352 and buffer 351 of the output stream manager 161, e.g., a Huffmann code, see Huffman, David A. "A method for the construction of minimum-redundancy codes." Proceedings of the IRE 40.9 (1952): 1098-1101. This helps to further reduce the amount of data to be routed to and from the external memory 111.

As illustrated in FIG. 18, the RCU 161 includes a plurality of FUs 321, 322 (while in FIG. 18 a count of two FUs 321, 322 is illustrated, in other examples, it would be possible that the RCU 161 includes a larger count of FUs 321, 322. The various FUs 321, 322 can be implemented alike or can be identical to each other. The various FUs 321, 322 may be configured to perform arithmetic operations 2091, 2092 such as multiplication or summation. For example, the RCU 161 may include a count of at least 200 FUs 321, 322, optionally at least 1000 FUs 321, 322, further optionally at least 5,000 FUs 321, 322. An input stream router 344 routes the data streams 810-1, 810-2 towards different FUs 321.

As illustrated in FIG. 18, the RCU 161 includes multiple blocks of L1 cache memory 311 - 314 associated with the FUs 321-322. As can be seen from FIG. 18, the various blocks of the L1 cache memory 311-314 are arranged on the same level of hierarchy with respect to the FUs 321-322, because access of the FUs 321-322 to the blocks of L1 cache memory 311-314 is not via the other blocks of the L1 cache memory 311-314. Each block of the L1 cache memory 311-314 is associate with a respective single FU 321-322; hence the blocks of L1 cache memory 311-314 are local memories, dedicated to one of the FUs 321, 322, respectively (cf. dashed lines in FIG. 18). Non routers etc. are required between the respective blocks of the L1 cache memory 311-314 and the FUs 321, 322.

For example, the memory blocks 312, 314 may be configured to buffer control data which is indicative of the zero values and/or non-zero values in the input data streams 810; while the memory blocks 311, 313 may be configured to store zero and/or non-zero values which are indicative of the data of the input feature map and the filter map, respectively. Typically, the memory blocks 311, 313 may be significantly larger in memory size than the memory blocks 312, 314.

For example to memory blocks 311 may be configured to buffer at least a section of an input data stream 810 indicative of data of the input feature map; while the memory blocks 313 may be configured to store at least a section of an input data stream 810 indicative of data of the filter map. The memory blocks 312 may be configured to buffer at least a section of the input data stream 810 indicative of data of the input feature map which is different from the sections buffered in the memory blocks 311. The memory blocks 314 may be configured to buffer at least a section of the input data stream 810 indicative of data of the filter map which is different from the sections buffered in the memory blocks 312.

For example, the section of the input data streams 810 buffered in the memory blocks 312, 314 may be indicative of positions of non-zero values in the input data streams 810; these non-zero values may be included in sections of the input data stream 810 stored in the memory blocks 311, 313.

In the example of FIG. 18, the input stream manager 162 also includes L2 cache memory 341 (labeled stick buffer in FIG. 18). Data may be provided to the L1 cache memory blocks 311-314 by the input stream router 344 via the L2 cache memory 341. The cache memory 341 may be used to buffer sticks of data - e.g., receptive fields 251, 252 - from the respective map, e.g., the input feature map. In some examples, the cache memory 341 may be allocated to storing data of the input feature map, but not allocated to store data of the kernel map.

Further illustrated in FIG. 18 are first-in first-out (FIFO) registers 315 associated with the various FUs 321, 322. The registers 315 can be used to buffer the output data streams obtained from the FUs 321, 322. This may facilitate time-aligned forwarding of output data streams of different convolutions 2001, 2002.

The RCU 161, in particular the output stream manager 163, includes a postprocessing unit 330. The postprocessing unit 330 can be configured to modify the data processed by the FUs 321, 322, i.e., the output data streams, based on a predefined transformation. Here, linear or non-linear functions may be used. Some other type of transformation may also be used. Hence, values in the output data streams received from the FUs 321, 322 may be modified. based on a nonlinear function. While in the example of FIG. 18 a dedicated postprocessing unit 330 non-linear postprocessing is illustrated, in other examples, it would also be possible that non-linear postprocessing is associated with a dedicated layer of the CNN 200.

Examples of non-linear postprocessing functions include:

(i) Rectified Linear Function (ReLU) - non-saturating activation function defined, by

$$A_f(x) = \begin{cases} 0, x < 0 \\ x, x \geq 0 \end{cases}. \tag{9}$$

(ii) Hyperbolic Tangent Function - saturation activation function, defined by

$$A_f(x) = \tanh(x) = \frac{e^x - e^{-x}}{e^x + e^{-x}}. \tag{10}$$

(iii) Sigmoid Function - saturation activation function, defined by

$$A_f(x) = \frac{1}{1 + e^{-x}}. \tag{11}$$

(iv) Softmax Function - saturation activation function, which "squashes" a N-dimensional vector x of arbitrary values to a N-dimensional vector f(x) of real values in the range (0, 1) that add up to 1, defined by

$$A_f(\mathbf{x})_i = \frac{e^{x_i}}{\sum_{j=1}^{N} e^{x_j}}, \ i = 1, ..., N. \tag{12}$$

Compared to other functions the usage of ReLU is sometimes preferred, because it results in the CNN 200 training several times faster, without making a significant difference to generalisation accuracy. However, Softmax function is usually used in the final layer of the CNN 200 to generate output classification predictions in terms of class membership probabilities.

As will be appreciated from the description of the various nonlinear postprocessing functions, often, the postprocessing results in an output data stream 850 which includes many zero values. For example - and with reference to the Eq. 9 - sometimes, all values in the output data streams are converted to a zero value if they fall below a threshold. For example, the zero values may be cropped by the encoder 352.

For example, it is possible that the output data stream - e.g., after non-linear post-processing - is compressed according to a compression algorithm. Here, it may be possible to crop zero values in the output data stream. This may be done by the encoder 352 and the output buffer 351.

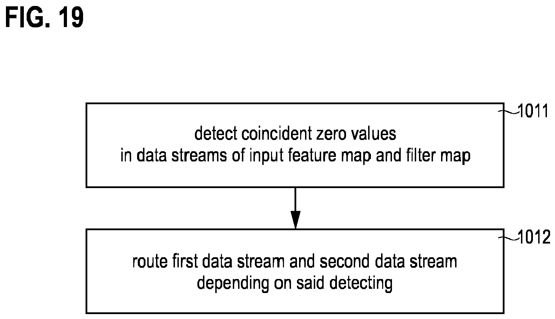

FIG. 19 is a flowchart of a method according to various examples.

In 1011, coincident non-zero values are detected at corresponding positions in a first data stream which is indicative of data of the input feature map and in the second data stream which is indicative of data of the filter map. For example, in 1011 it could be checked whether at the same positions within the first and second data streams, non-zero values are present. For example, block 1011 could be executed by the non-zero detect control logic 331 of the RCU

14

161 (cf. FIG. 18).

In 1012, the first and second data streams are routed to a plurality of FUs depending on said detecting of the coincident non-zero values.

The method may further include the plurality of FUs performing the arithmetic operations between values of the first data stream and values of the second data stream in response to said routing of the first data stream and the second data stream to the plurality of FUs. For example, each arithmetic operation may provide an output value based on a first input value associated with a position in the first data stream and further based on a second input value associated with a corresponding position in the second data stream; as such, the arithmetic operations may provide a combination of the first data stream and the second data stream. Based on the arithmetic operations, values of an output data stream may be obtained.

By routing the first and second data streams depending on said detecting of the coincident non-zero values, it becomes possible to skip certain positions in the first and second data streams; in particular, it becomes possible to skip certain positions in the first and second data streams which do not provide significant results for the object recognition in the output data stream. Hence, the overall duration required for performing a filter operation can be reduced. In other words, the number of clock cycles required to perform the filter operation can be reduced by skipping certain positions of the data streams that are not routed to the respective FU. Reducing the overall duration can help to achieve the object recognition task within shorter time.

Regarding said routing of the first and second data streams depending on said detecting of coincident non-zero values: in other words, it is possible to selectively forward positions of the first and second data streams depending on whether a coincident non-zero value has been detected or not. For example, only such values of the first and second data streams may be routed to a FU of the plurality of FUs which correspond to coincident non-zero values. Other positions may be skipped. In other words, the respective control logic may be configured to exclusively route the coincident non-zero values to the plurality of FUs.

This may be based on the finding that certain are arithmetic operations only yield significant results for the overall task of the object recognition if both positions of the first and second data streams carry non-zero values. For example, if the arithmetic operations include a multiplication between a first value of the first data stream and a second value of the second data stream, the result of the multiplication may be a zero value if at least one of the first value and the second value is zero. Such a zero value may be of subordinate relevance for the overall task of object recognition.

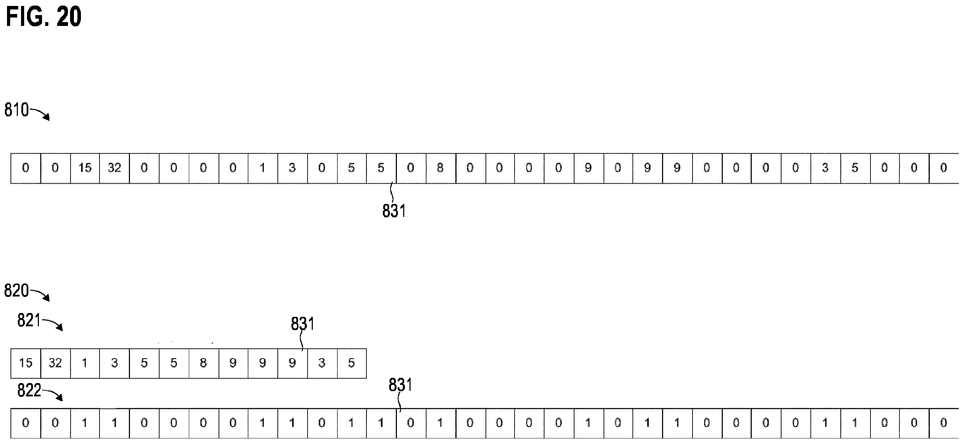

It would be possible to detect the coincident non-zero values in the first data stream and the second data stream in a scenario where the first data stream and/or the second data stream are compressed. For example, it would be possible that the first data stream is zero-value run-length encoded. Alternatively or additionally, it would be possible that the second data stream is zero-value run-length encoded. This is illustrated in FIG. 20.

FIG. 20 illustrates aspects with respect to data streams 810, 820. FIG. 20 illustrates a non-compressed data stream 810, e.g., corresponding to the data stream 810-1 or to the data stream 810-2 (cf. FIG. 18). The data stream 810 includes 32 positions 831, each position 831 carrying a respective value. From the total of 32 positions 831, only 12 positions carry non-zero values. Each value is encoded, e.g., by a 16-bit or 32-bit word. Assuming that each position 831 carries a respective value encoded by a 32-bit word, the total length of the data stream 810 is 32x32 bit=1024 bit.

FIG. 20 also illustrates a compressed data stream 820. The compressed data stream is zero-value run-length encoded. The non-compressed data stream 810 and the compressed data stream 820 of FIG. 20 are indicative of the same underlying data. The compression of the compressed data stream 820 is lossless.

The compressed data stream 820 in the example of FIG. 20 includes a section 821 and a further section 822. The section 821 includes only the non-zero values of the data stream 810, e.g., again encoded by a 16-bit or 32-bit word; the section 821 does not include zero values. Thus, the length of the section 821 is shorter than the length of the overall uncompressed data stream 810. Assuming that each position 831 of the section 821 carries a respective value encoded by a 32-bit word, the total length of the section 821 is 12x32 bit=384 bit.

To provide lossless compression, the section 822 of the compressed data stream 820 is indicative of the positions associated with the non-zero values of the compressed data stream 820, included in the section 821. The section 822 is 32 bit in length, each position 831 of the section 822 being 1-bit in size. I.e., the overall size of the section 822 is 32 bit. In the example of FIG. 20, each position 831 of the section 822 is 1 bit in length and either carries a logical FALSE - i.e., a zero value at the corresponding position of the data stream 820 - or carries a logical TRUE - i.e., a non-zero value at the corresponding position of the data stream 820. Hence, in other words, the section 822 is a vector including multiple bits (with 1-bit per position), wherein each bit is indicative whether the respective position 831 of the data stream 820 carries a zero value or a non-zero value.

The overall length of the compressed data stream 820 including the sections 821, 822 is then 384 bit (section 821) + 32 bit (section 822) = 416 bit. Thus, the compression reduces the amount of data that has to be moved to the external memory 111 and that is required to be retrieved from the external memory 111. This reduces the overall time required for performing the object recognition task.

To facilitate detecting of the coincident non-zero values in the compressed data streams 820 indicative of data of the input feature map and the filter map, it would be possible to store the different sections 821, 822 of the respective compressed data stream 820 in different memory blocks. For example, the section 821 of the data stream 820 indicative of the input feature map could be stored in the memory block 311. The section 822 of the data stream 820 indicative of the input feature map could be stored in the memory block 312. The section 821 of the data stream 820 indicative of the filter map could be stored in the memory block 313. The section 822 of the data stream 820 indicative of the filter map could be stored in the memory block 314.

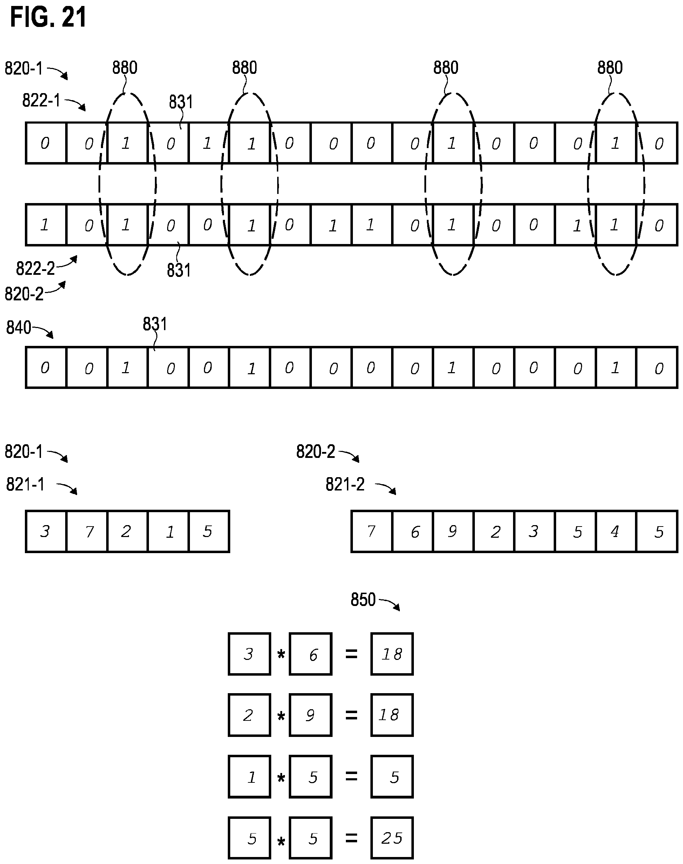

Detection of the coincident non-zero values at corresponding positions of the compressed data streams 820 is illustrated in connection with FIG. 21.

FIG. 21 illustrates aspects with respect to detecting coincident non-zero values 880 in compressed data streams 820-1, 820-2 indicative of data of an input feature map and indicative of data of the filter map. In FIG. 21, the section 822-1 of a compressed data stream 820-1 indicative of data of the input feature map is illustrated; and, furthermore, the section 822-2 of a further data stream 820-2 indicative of data of the filter map is illustrated. Again, the sections 822-1, 822-2 are indicative of the positions of the non-zero values of the respective compressed data stream 820-1, 820-2; the non-zero values can be included in respective sections 821-1, 821-2 of the compressed data streams 820-1, 820-2. The sections 822-1, 822-2 include respective vectors of bits, wherein each bit is indicative of whether the respective position carries a zero value or a non-zero value. For example, the section 822-1 may be stored in the memory block 312 and the section 822-2 may be stored in the memory block 314. For example, the section 821-1 may be stored in the memory block 311 and the section 821-2 may be stored in the memory block 313.

Then, it is possible that the control logic 331 (cf. FIG. 18) performs a logical bitwise AND-operation between the individual positions 831 of the sections 822-1, 822-2. The result of this AND-operation is illustrated as data stream 840 in FIG. 21. The data stream 840 is indicative of the positions of the compressed data streams 820-1, 820-2 carrying coincident non-zero values 880. Only those positions 831 of the section 840 carry a logical TRUE which correspond to a coincident non-zero value 880.

It may be required to transform the information regarding the position of the coincident non-zero values 880 included in the section 840 to a format appropriate for retrieving the respective values included in the sections 821-1, 821-2 from the memory blocks 311, 313. This operation may be performed by respective control logic 332, 333 (cf. FIG. 18).

For example, the control logic 332, 333 may be configured to determine, for each logical TRUE in the data stream 840, the count of logical TRUES in the section 822-1 at positions 831 of the section 822-1 preceding the position 831 of the respective logical TRUE in the data stream 840. This number may serve as address for receiving the respective non-zero value from the section 821-1.

For example, the control logic 332, 333 may be configured to determine, for each logical TRUE in the data stream 840, the count of logical TRUES in the section 822-2 at positions 831 of the section 822-2 preceding the position 831 of the respective logical TRUE in the data stream 840. This number may serve as address for receiving the respective non-zero value from the section 821-2.

For example, the count of logical TRUEs preceding the first logical TRUE in section 840 is zero for section 822-1; and one for section 822-2. Therefore, the value carried by the first position 831 in section 821-1 ("3" in FIG. 21) is to be multiplied with the value carried by the second position in section 821-2 ("6" in FIG. 21), according to a zero-base memory access scheme. This yields the first value of the output data stream 850 ("18" in FIG. 21).

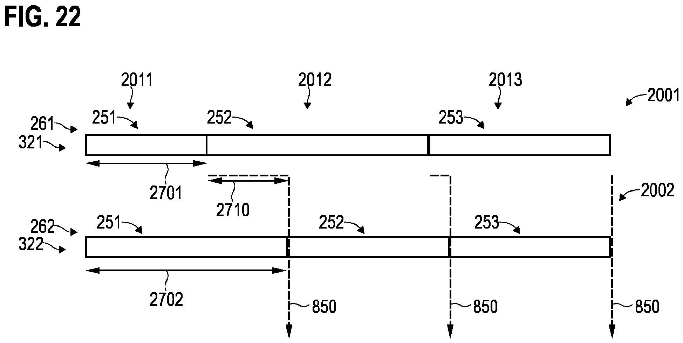

FIG. 22 illustrates aspects with respect to allocating different combinational operations 2011-2013 of convolutions 2001, 2002 to the FUs 321, 322. Different combinational operations 2011 - 2013 are associated with different receptive fields 251-253. The FU 321 performs the combinational operations 2011-2013 between the kernel 261 and the receptive fields 251-253 and thus associated with the convolution 2001; while the FU 322 performs combinational operations 2011-2013 between the kernel 262 and the receptive fields 251-253 and thus associated with the convolution 2002. Each combinational operation 2011-2013 includes a plurality of arithmetic operations 2091, 2092 (not illustrated in FIG. 22). As will be appreciated from FIG. 22, the arithmetic operations 2091, 2092 of different convolutions 2001, 2002 are assigned to different FUs 321, 322. Hence, a given FU 321, 322 may perform all arithmetic operations of a given convolution 2001, 2002 or at least a multiple arithmetic operations of a given convolution 2001, 2002 forming a respective subset. This enables to parallelize the calculation of the convolutions 2001, 2002 and idle times of the FUs 321, 322 are avoided.

It would be possible that the part of the data steam 810, 810-1, 810-2, 820, 820-1, 820-2 indicative of the kernel 261 and the part of the data steam 810, 810-1, 810-2, 820, 820-1, 820-2 indicative of the kernel 262 include a different count of zero values; then, also the count of coincident non-zero values 830 can vary for each combinational operation 2011 - 2013 depending on the respective kernel 261, 262. Then, it is possible that the FUs 321, 322 have to perform a different number of arithmetic operations 2091, 2092 even when convoluting the same receptive field 251-253, because the routing of the respective input data streams 810, 810-1, 810-2, 820, 820-1, 820-2 is based on the detected coincident non-zero values. For example, in FIG. 22, the FU 321 completes the combinational operation 2011 between the kernel 261 and the receptive field 251 in a shorter time duration 2701 than the time duration 2702 required by the FU 322 to complete the corresponding combinational operation 2011 between the kernel 261 and the receptive field 252 - even though, both, the FU 321, as well as the FU 322 starts performing of the combinational operation 2011 at essentially the same point in time such that the time durations 2701 and 2702 are overlapping.

It can be helpful to forward the output data streams 850 associated with the same receptive field 251-253, but obtained from different convolutions 2001, 2002 at associated points in time (cf. dashed lines in FIG. 22). Associated points in time can correspond to essentially at the same point in time. Associated points in time can also correspond to forwarding the output data streams 850 associated with the same receptive field 251-253, but obtained from different convolutions 2001, 2002 in immediate succession, i.e., without any intermediate output data streams 850 being received by the output stream manager 163 in-between. This can be helpful when performing the non-linear postprocessing by the postprocessing unit 330 and/or when performing write operations to the external memory 111. To achieve this, it is possible to buffer, for a time duration 2710, the output data stream 850 obtained from the FU 321 which completes the combinational operation 2011 between the kernel 261 and the receptive field 251 earlier than the FU 322 completing the combinational operation 2011 between the kernel 262 and the receptive field 251. This buffering may be until the FU 322 completes the combinational operation 2011 of the convolution 2002 between the kernel 262 and the receptive field 251. Such buffering can be provided by the FIFO memories 315.

This also helps to avoid an idle time of the FU 321. In particular, the FU 321 can start performing the combinational operation 2012 of the convolution 2001 between the kernel 261 and the receptive field 252 prior to the FU 321 completing the combinational operation 2011 of the convolution 2002 and prior to the FU 321 start the combinational operation 2012 of the convolution 2002 between the receptive field 252 and the kernel 262. Thus, performing of the combinational operations 2011-2013 is decoupled from forwarding the respective output data streams 850.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For example, while above various examples have been described with respect to multi-layer neural networks being implemented by CNNs, in other examples, it would also be possible to employ such techniques for other kinds and types of multi-layer neural networks, e.g., to conventional multi-layer perceptron neural networks. Furthermore, generally, various graph-based filtering algorithms can benefit from the techniques disclosed herein. In particular, while above various examples have been described with respect to kernel maps and convolutions between receptive fields of the input feature map and kernels of the kernel maps, respective techniques may also be applied for other kinds and types of filter operations. Generally, instead of a kernel map, a filter map may be used.

For further illustration, above various techniques have been described in which non-zero values are detected. It would be possible that the non-zero values are detected based on the threshold. The threshold can be larger than zero. The threshold may depend on a predefined transition, e.g., a non-linear function, based on which the values of the output data stream are modified by a postprocessing unit. Then, it is possible that the first and second data streams are routed to the plurality of FUs depending on said detecting of the coincident non-zero values in accordance with the threshold. For example, only such values of the first and second data streams could be forwarded to the FUs which, e.g., individually or as a sum, exceed a certain threshold. Such techniques may be helpful if subsequently nonlinear filtering is applied, e.g., ReLU filtering. Here, it can be assumed that such values will be set to 0 that do not exceed a certain threshold associated with the nonlinear filtering; then, processing of such values can already be skipped upstream when routing the input data streams to the FUs. This also applies to other predefined transitions.

**Claims**

**1.** A circuit (100, 121, 123, 161), comprising:

- a plurality of computational units (321, 322) configured to perform convolutions (2001, 2002) for recognition of at least one object,
- at least one memory (111, 122, 164, 311-314, 341) configured to store an input feature map (208, 209) representing the at least one object and a filter map, and
- a control logic (112, 162, 331-333, 349, 359) configured
to detect coincident non-zero values (880) at corresponding positions (831) in a first data stream (810, 810-1, 810-2, 820, 820-1, 820-2) indicative of data of the input feature map (208, 209) and in a second data stream (810, 810-1, 810-2, 820, 820-1, 820-2) indicative of data of the filter map, and
to route the first data stream (810, 810-1, 810-2, 820, 820-1, 820-2) and the second data stream (810, 810-1, 810-2, 820, 820-1, 820-2) to the plurality of computational units (321, 322) depending on said detecting of the coincident non-zero values (880).

**2.** The circuit (100, 121, 123, 161) of claim 1,
wherein the control logic (112, 162, 331-333, 349, 359) is configured to exclusively route the coincident non-zero values (880) to the plurality of computational units (321, 322).

**3.** The circuit (100, 121, 123, 161) of claims 1 or 2,
wherein the first data stream (820, 820-1, 820-2) comprises a first section (821) and a second section (822), the first section (821) of the first data stream (820, 820-1, 820-2) comprising non-zero values and the second section (822) of the first data stream (820, 820-1, 820-2) being indicative of the positions (831) of said non-zero values, and/or wherein the second data stream (820, 820-1, 820-2) comprises a first section (821) and a second section (822), the first section (821) of the second data stream (820, 820-1, 820-2) comprising non-zero values and the second section (822) of the second data stream (820, 820-1, 820-2) being indicative of the positions (831) of said non-zero values.

**4.** The circuit (100, 121, 123, 161) of claim 3,
wherein the first section (821) of the first data stream (820, 820-1, 820-2) does not include zero values, and/or wherein the first section (821) of the second data stream (820, 820-1, 820-2) does not include zero values.

**5.** The circuit (100, 121, 123, 161) of claims 3 or 4,
wherein the second section (822) comprises vector including multiple bits,
wherein each bit is indicative of whether a certain position within the data stream (830, 820-1, 820-2) carries a zero value or a non-zero value.

**6.** The circuit (100, 121, 123, 161) of any one of claims 3-5,
wherein the at least one memory (111, 122, 164, 311-314, 341) comprises a plurality of first memory blocks (311), each first memory block (311) of the plurality of first memory blocks (311) being associated with a respective computational unit (321, 322) of the plurality of computational units (321, 322) and configured to buffer the first section (821) of the first data stream (820, 820-1, 820-2),
wherein the at least one memory (111, 122, 164, 311-314, 341) comprises a plurality of second memory blocks (312), each second memory block (312) of the plurality of second memory blocks (312) being associated with a respective computational unit (321, 322) of the plurality of computational units (321, 322) and configured to buffer the second section (822) of the first data stream (820, 820-1, 820-2),
wherein the at least one memory (111, 122, 164, 311-314, 341) comprises a plurality of third memory blocks (313), each third memory block (313) of the plurality of third memory blocks (313) being associated with a respective computational unit (321, 322) of the plurality of computational units (321, 322) and configured to buffer the first section (821) of the second data stream (820, 820-1, 820-2),
wherein the at least one memory (111, 122, 164, 311-314, 341) comprises a plurality fourth memory blocks (314), each fourth memory block (314) of the plurality of fourth memory blocks (314) being associated with a respective computational unit (321, 322) of the plurality of computational units (321, 322) and configured to buffer the second section (822) of the second data stream (820, 820-1, 820-2).

**7.** The circuit (100, 121, 123, 161) of any one of the preceding claims,
wherein the first data stream (820, 820-1, 820-2) is zero value run-length encoded, and/or wherein the second data stream (820, 820-1, 820-2) is zero value run-length encoded.

**8.** The circuit (100, 121, 123, 161) of any one of the preceding claims,
wherein a first computational unit (321, 322) is configured to perform a combinational operation (2011-2013) of a first convolution (2001, 2002) between a first receptive field (251-253) of the input feature map (208, 209) and a first filter (261, 262) of the filter map in a first time duration (2701, 2702) which depends on the count of coincident non-zero values in the part of the first data stream (820, 820-1, 820-2) which is indicative of the first receptive field (251-253) and the part of the second data stream (820, 820-1, 820-2) which is indicative of the first filter (261, 262),
wherein a second computational unit (321, 322) is configured to perform a combinational operation (2011-2013) of a second convolution (2001, 2002) between the first receptive field (251-253) of the input feature map (208, 209) and a second filter (261, 262) of the filter map in a second time duration (2701, 2702) which depends on the count of coincident non-zero values (880) in the part of the first data stream (820, 820-1, 820-2) which is indicative of the first receptive field (251-253) and the part of the second data stream (820, 820-1, 820-2) which is indicative of the second filter (261, 262),
wherein the first time duration (2701, 2702) is shorter from the second time duration (2701, 2702).

**9.** The circuit (100, 121, 123, 161) of claim 8,

wherein each convolution (2001, 2002) comprises a plurality of arithmetic operations (2091, 2092),
wherein the control logic (112, 162, 331-333, 349, 359) is configured to allocate a subset of or all arithmetic operations (2091, 2092) of the first convolution (2001, 2002) to the first computational unit (321, 322),
wherein the control logic (112, 162, 331-333, 349, 359) is configured to allocate a subset of or all arithmetic operations (2091, 2092) of the second convolution (2001, 2002) to the second computational unit (321, 322).

10. The circuit (100, 121, 123, 161) of claims 8 or 9,
    wherein the first computational unit (321, 322) is configured to start performing a further combinational operation (2011-2013) of the first convolution (2001, 2002) between a second receptive field (251-253) of the input feature map (208, 209) and the first filter (261, 262) prior to the second computational unit (321, 322) concluding performing of the combinational operation (2011-2013) of the second convolution (2001, 2002) between the first receptive field (251-253) and the second filter (261, 262).

11. The circuit (100, 121, 123, 161) of any one of claims 8 - 10, further comprising:

    - a plurality of output buffer memories (315) associated with the plurality of computational units (321, 322),

    wherein the control logic (112, 162, 331-333, 349, 359) is configured to control the plurality of output buffer memories (315) to forward a first output data stream (850) obtained by the combinational operation (2011-2013) of the first convolution (2001, 2002) between the first receptive field (251-253) and the first filter (261, 262) and a second output data stream (850) obtained by the combinational operation (2011-2013) of the second convolution (2001, 2002) between the first receptive field (251-253) and the second filter (261, 262) at associated points in time.

12. The circuit (100, 1221, 123, 161) of any one of the preceding claims, further comprising:

    - a postprocessing unit (330) configured to receive an output data stream (850) from the plurality of computational units (321, 322) and to modify the values of the output data stream (850) by a predefined transformation, and
    - an encoder (352) configured to crop the zero values from the output data stream (850) after said modifying.

13. The circuit (100, 1221, 123, 161) of any one of the preceding claims, further comprising:

    - an encoder (352) configured to receive an output data stream (850) from the plurality of computational units (321, 322) and to zero value run-length encode the output data stream (850).

14. A method, comprising:

    - detecting coincident non-zero values (880) at corresponding positions (831) in a first data stream (810, 810-1, 810-2, 820, 820-1, 820-2) and in a second data stream (810, 810-1, 810-2, 820, 820-1, 820-2), the first data stream being indicative of data of an input feature map (208, 209) representing at least one object, the second data stream (810, 810-1, 810-2, 820, 820-1, 820-2) being indicative of data of a filter map,
    - depending on said detecting of the coincident non-zero values (880): routing the first data stream (810, 810-1, 810-2, 820, 820-1, 820-2) and the second data stream (810, 810-1, 810-2, 820, 820-1, 820-2) to a plurality of computational units (321, 322), and
    - based on the first data stream (810, 810-1, 810-2, 820, 820-1, 820-2) and the second data stream (810, 810-1, 810-2, 820, 820-1, 820-2): the plurality of computational units (321, 322) performing convolutions (2001, 2002) for recognition of the at least one object.

15. The method of claim 14,
    wherein the method is executed by the circuit (100, 1221, 123, 161) of any one of claims 1 - 13.

# FIG. 1

External Memory — 111

Computer — 121

Internal Memory — 122

100

285  201  280

# FIG. 2

Load input data
as current input feature map ——1001

Perform layer processing
based on current input feature map ——1002

Write an output feature map ——1003

Further layer? ——1004 → NO

YES

Load current output feature map
as current input feature map ——1005

FIG. 3

EP 3 401 840 A1

# FIG. 4

# FIG. 5

## FIG. 6

EP 3 401 840 A1

## FIG. 7

## FIG. 8

## FIG. 9

26

**FIG. 10**

# FIG. 11

EP 3 401 840 A1

FIG. 12

EP 3 401 840 A1

## FIG. 13

218

$W_I$

219 260

255
OFM(1, 1, $y_1$)

$H_O$

$H_I$

255
OFM(1, 1, $y_2$)

$D_I$

## FIG. 14

219

220 260

255
OFM(1, 1, $y_1$)

$H_I$

$H_O$

255
OFM(1, 1, $y_2$)

# FIG. 15

100

121

123    123    123

| CM | CM | CM |
|---|---|---|
| Internal Memory 122 | Internal Memory 122 | Internal Memory 122 |

Memory Access Arbiter —113

Memory Controller —112

computer

External Memory —111

# FIG. 16

# FIG. 17

FIG. 17

# FIG. 18

## FIG. 19

```
┌─────────────────────────────────────────────────────┐ ┌1011
│            detect coincident zero values             │
│    in data streams of input feature map and filter map │
└─────────────────────────────────────────────────────┘
                          │
                          ▼
┌─────────────────────────────────────────────────────┐ ┌1012
│       route first data stream and second data stream  │
│              depending on said detecting             │
└─────────────────────────────────────────────────────┘
```

# FIG. 20

# FIG. 21

820-1
822-1

| 0 | 0 | 1 | 0 | 1 | 1 | 0 | 0 | 0 | 0 | 1 | 0 | 0 | 0 | 1 | 0 |

880   880   880   880   831

| 1 | 0 | 1 | 0 | 0 | 1 | 0 | 1 | 1 | 0 | 1 | 0 | 0 | 1 | 1 | 0 |

822-2   831
820-2

840   831

| 0 | 0 | 1 | 0 | 0 | 1 | 0 | 0 | 0 | 0 | 1 | 0 | 0 | 0 | 1 | 0 |

820-1
821-1

| 3 | 7 | 2 | 1 | 5 |

820-2
821-2

| 7 | 6 | 9 | 2 | 3 | 5 | 4 | 5 |

850

$3 * 6 = 18$

$2 * 9 = 18$

$1 * 5 = 5$

$5 * 5 = 25$

## FIG. 22

Europäisches Patentamt
European Patent Office
Office européen des brevets

# EUROPEAN SEARCH REPORT

Application Number

EP 18 17 1784

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SONG HAN ET AL: "EIE: Efficient Inference Engine on Compressed Deep Neural Network", ARXIV.ORG, CORNELL UNIVERSITY LIBRARY, 201 OLIN LIBRARY CORNELL UNIVERSITY ITHACA, NY 14853, 4 February 2016 (2016-02-04), XP080681445, * point 4; page 2 * * page 3, column 2, last paragraph; figures 4,5 * * sec. "Activation Queue and Load Balancing"; page 4, column 2 * | 1-15 | INV. G06K9/00 |
| A | REAGEN BRANDON ET AL: "Minerva: Enabling Low-Power, Highly-Accurate Deep Neural Network Accelerators", 2013 21ST INTERNATIONAL CONFERENCE ON PROGRAM COMPREHENSION (ICPC); [INTERNATIONAL SYMPOSIUM ON COMPUTER ARCHITECTURE.(ISCA)], IEEE, US, 18 June 2016 (2016-06-18), pages 267-278, XP032950665, ISSN: 1063-6897, DOI: 10.1109/ISCA.2016.32 ISBN: 978-0-7695-3174-8 [retrieved on 2016-08-24] * the whole document * | 1-15 | |

TECHNICAL FIELDS SEARCHED (IPC)

G06K

-/--

The present search report has been drawn up for all claims

| Place of search | Date of completion of the search | Examiner |
|---|---|---|
| The Hague | 12 September 2018 | Mitzel, Dennis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHEN YU-HSIN ET AL: "Eyeriss: An Energy-Efficient Reconfigurable Accelerator for Deep Convolutional Neural Networks", IEEE JOURNAL OF SOLID-STATE CIRCUITS, IEEE SERVICE CENTER, PISCATAWAY, NJ, USA, vol. 52, no. 1, 1 January 2017 (2017-01-01), pages 127-138, XP011638633, ISSN: 0018-9200, DOI: 10.1109/JSSC.2016.2616357 [retrieved on 2017-01-09] * the whole document * ----- | 1-15 | |
| A | Renzo Andri ET AL: "YodaNN: An Architecture for Ultra-Low Power Binary-Weight CNN Acceleration", , 17 June 2016 (2016-06-17), XP055485030, Retrieved from the Internet: URL:https://arxiv.org/pdf/1606.05487.pdf * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 12 September 2018 | Mitzel, Dennis |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DUNDAR, AYSEGUL et al.** Embedded Streaming Deep Neural Networks Accelerator With Applications. *IEEE transactions on neural networks and learning systems,* 2016

- **CHEN, YU-HSIN et al.** Eyeriss: An energy-efficient reconfigurable accelerator for deep convolutional neural networks. *IEEE Journal of Solid-State Circuits,* 2016
- **HUFFMAN, DAVID A.** A method for the construction of minimum-redundancy codes. *Proceedings of the IRE,* 1952, vol. 40.9, 1098-1101